# EUROPEAN PATENT SPECIFICATION

(11) **EP 3 066 714 B1**
(45) Date of publication and mention of the grant of the patent: **26.12.2018**
(21) Application number: 14860476.2
(22) Date of filing: 08.11.2014
(51) Int. Cl.: H01M 10/44, H01M 10/46, G01S 5/02, H01M 10/48, H02J 7/00, H01M 10/42, H02J 3/38, H02J 7/35, H02S 20/30

(54) **SOLAR CHARGER ENERGY MANAGEMENT AND MONITORING SYSTEM**
SYSTEM ZUR VERWALTUNG UND ÜBERWACHUNG EINER SONNENENERGIE-LADEVORRICHTUNG
SYSTÈME DE GESTION ET DE SURVEILLANCE DE L'ÉNERGIE D'UN CHARGEUR SOLAIRE

(30) Priority: 08.11.2013 US 201361901802 P
(43) Date of publication of application: 14.09.2016
(73) Proprietor: SunStream Technology, Inc., Gilbert, AZ 85297-0617 (US)
(72) Inventor: ANDERSON, John A, Superior, Colorado 80027 (US)
(74) Representative: Potter Clarkson LLP
(86) International application number: PCT/US2014/064700
(87) International publication number: WO 2015/070112

(56) References cited:
- EP-A1- 2 624 406
- WO-A1-2010/080924
- US-A1- 2011 050 160
- US-A1- 2011 140 647
- US-A1- 2013 278 202
- US-A1- 2013 285 594

## Description

### RELATED APPLICATIONS

This application claims the benefit of U.S. Provisional Patent Application Serial No. 61/901,802 entitled "Solar Charger Energy Management and Monitoring System," filed November 08, 2013, from which priority is claimed under 35 U.S.C. 119, and the disclosure of which is hereby incorporated herein by reference in its entirety.

### TECHNICAL FIELD

The various devices, systems, programs and methods described herein relate generally to the monitoring and management of small energy generation systems. More specifically, a software application, methods and the devices described herein facilitate an increase in performance, utility and usability of portable solar energy generation systems that can be used with a variety of portable electronic devices and/or energy storage systems.

### BACKGROUND OF THE INVENTION AND DISCUSSION OF RELATED ART

Mobile electronic and electrical devices are becoming increasingly prevalent in our daily lives. While such devices were originally provided to fulfill a limited function (i.e., a "cell" phone was originally designed to primarily send and receive telephone calls via wireless "cell" towers), the continued development of technology has given rise to mobile devices that provide a variety of functions. For example, a "smart" phone typically includes a microprocessor and associated circuitry capable providing a wide variety of functions, including allowing a user to play games, write documents, make phone calls, detect and transmit GPS location, take digital pictures and scan documents, pay bills, and countless other functions. However, the ability to perform these many functions often requires significant energy usage by the smart phone.

Mobile phones and other electronics have further been plagued by the desire of manufacturers, developers and consumers to continually "downsize" and/or miniaturize their device offerings, which often includes a reduction in the size of the batteries or other energy storage systems contained within the devices. Reducing battery size typically reduces a battery's energy storage capacity, which when coupled to an increased energy load demand (to accommodate the increased variety of device functions), typically significantly reduces the functional life of a battery charge for a given device.

Various solutions have been proposed to address the limited battery life of mobile devices, with varying results. One suggestion is to simply recharge the devices more frequently, often by using "plug-in" type wall chargers. However, this approach directly contradicts the "mobile" nature of such devices, in that a recharging device is then often "tethered" to an energy source providing the recharge for an extended period of time. Moreover, this approach assumes the availability of energy charging infrastructure like central energy generation and/or portable generators, which may not be available in developing countries, or such infrastructure may be disrupted during military or civil unrest and/or the occurrence of natural disasters. Another alternative solution is to provide one or more supplemental batteries or other energy storage devices (i.e., battery "sleeves") for use with a mobile device, but again this approach is often suboptimal, in that carrying extra storage devices results in increased bulk for the device (i.e., the weight and bulk of the extra energy storage device). Moreover, the depletion of such supplemental energy storage merely delays the inevitable - the user is still eventually left with no energy for their device - and additional storage devices can significantly increase costs in the system.

More recently, photovoltaic or "solar" cell arrays have been used to convert light energy to electrical energy, which is then utilized to power and/or recharge mobile devices, as well as facilitate the increased portability of any portable electronic devices. While such light energy is marketed as "freely available" from sunlight (and/or other radiation sources), there are significant costs associated with the production and assembly of photovoltaic cell arrays and their associated circuitry, and the various electrical components associated with such energy generation systems are typically quite fragile, sensitive and prone to environmental degradation and/or breakage. A need therefore exists for low-cost solar energy charging devices that are extremely durable, that do not include auxiliary circuity for "conditioning" of the generated power, and that provide sufficient charging power for quickly charging portable electronic devices (PEDs).
EP2624406 (A1) relates to a power identifying method in a system including a device with a storage battery, and a feeding device or a power generator that supplies power to the storage battery. US2011050160 (A1) discloses an apparatus for adaptive illumination charging, including: an image process sensor; a pixel sensor unit; a light quantity calculator; a controller; and a solar battery.

### BRIEF SUMMARY OF THE INVENTION

Aspects of the invention are disclosed in independent claims 1 and 10.

While LSEGS can be manufactured for a fraction of the cost of standard solar energy generating systems, such systems are often perceived as "less desirable" than their more complex and expensive counterparts. For example, complex solar energy generating systems often incorporate energy conversion and conditioning circuitry and energy storage equipment (i.e., batteries) that convert the potentially highly-variable output of solar-generating cell arrays to a more stable energy output for the system that is perceived as more suitable for transferal to a wide range of electronic equipment. Complex solar generating systems are also typically perceived as more tolerant to local operating conditions (i.e., solar incidence issues, panel positioning concerns, local weather conditions, etc.), as the onboard energy storage and associated circuitry can supply energy to an attached device even in the absence of significant solar generating capacity. Thus, various previous designs of LSEGS have heretofore been shunned by the commercial and consumer markets.

However, the improved LSEGS array designs contemplated herein (such as the various designs described in the '025 application) do not typically incorporate complex energy conditioning circuitry and/or energy storage systems, because in many instances a user may not have a desire or need to use their solar generated energy to power/charge such circuitry or internal storage devices. Rather, the user might desire that the entirety of the energy generated by the low cost solar energy system be simply used to power and/or charge the attached device, which can significantly increase the energy output for an individual solar panel design as compared to more complex systems.

One significant feature of various embodiments described herein includes the realization that many of the functions and/or "convenience features" of a complex solar generating system can be replicated (i.e., auxiliary circuitry), simulated to a meaningful degree and/or approximated by proper utilization of various hardware and software features available in a modern portable electronic device (such as programmable mobile phones and/or "smartphones") when attached to and/or powered by an LSEGS. By leveraging the software programming and/or hardware features of the charged device to replicate and/or approximate various functions of the various "energy hungry" features of more complex power generation systems, the various embodiments described herein can simplify and significantly improve the functioning of LSEGS, and can even enable the use of LSEGS to efficiently and effectively power/charge extremely sensitive portable electronic devices, such as iPhones and iPads at speeds approaching or exceeding wall-plug chargers. In some embodiments, the auxiliary circuitry may not be required to be "built-in" with the LSEGS design, because the hardware or software within the rechargeable battery or portable electronic device (i.e., mobile phone) might provide sufficient regulation of the charging sequence and discharging sequence (see the '025 patent) to obviate the need for supplemental power conditioning by the solar charging device (which may require supplemental programming and/or utilization of various hardware features of the device), enabling the LSEGS manufacturer to significantly reduce costs in the manufacture of the LSEGS.

In one exemplary embodiment, an LSEGS may be providing energy to an attached portable electronic device (PED), with a mobile APP resident on the PED, in which the mobile APP includes features allowing it to monitor and/or regulate the LSEGS performance, including various aspects of the discharging and/or charging sequence, and which can provide useful information and data to the user by displaying data and/or various other statistics on a display screen of the attached PED. Such monitoring and/or regulating features may include battery charge status, battery temperature, voltage, amperage, battery charge time remaining, average battery time remaining, battery charge time, average battery charge time, battery life per day, average use per day, other software application power usage, type of battery technology (i.e., type of battery, make of battery, model number, manufacturer, etc.), type of wireless network, type of phone network, battery charge flow, type of charging device, type of phone (i.e., make of phone, model of phone, manufacturer, etc.), and/or any combinations thereof. In various embodiments, the mobile APP may include the ability to identify the PED internal battery, manufacturer and/or origin, and type of storage technology, and report to the user how to best charge the PED/battery and/or how to best use the LSEGS in conjunction with the PED internal battery and/or PED.

In another exemplary embodiment, one or more mobile APPS may operate on a PED connected to a LSEGS, with the mobile APP(S) potentially optimizing and/or improving the performance of the LSEGS. For example, there are often conditions affecting the generating capacity and/or efficiency of a LSEGS which could be addressed, improved and/or corrected, if only the user were appropriately notified of the condition, was notified of the need for user action and/or knew of a potential solution (i.e., which could possibly include by monitoring and/or regulating LSEGS performance, the discharge sequence and/or charging sequence to observe changes over time). In various embodiments, the systems described herein include software that accesses and/or leverages the "smart" circuitry of the PED to monitor the performance of the attached LSEGS, and in various embodiments may desirably provide user feedback, instructions and/or suggestions, which may include various alternative solutions to optimize or improve the system's solar generating performance. In various embodiments, such solutions may be developed by software loaded onto the PED, without use of the remote communications capabilities (i.e., wireless or network access via the internet) of the electronic device, while in other embodiments the use of remote communications and/or analysis of LSEGS performance may facilitate the analysis and/or generation of such "suggestions" (which may include the transmission of LSEGS performance data to a remote analysis location via the internet). Such optimization or improvement of LSEGS performance may be customized by monitoring or regulating continuous sampling of data or by providing standard selections through average, historical and/or GPS location data.

In another exemplary embodiment, a mobile APP may leverage and/or repurpose the PED internal sensors to assist with the collection of LSGES, PED, and/or PED internal battery performance data, and/or the optimization of the LSEGS to improve LSEGS charging functions. Such internal sensors that may be leveraged and/or repurposed include rotation vector sensor, linear accelerometer sensor, gravity sensor, magnetic field sensor, light sensor, orientation sensor, proximity sensor, pressure sensor, screen orientation sensor, game rotation vector sensor and/or any combination thereof.

In another exemplary embodiment, a mobile APP may utilize the wireless and/or networking communications capabilities of PED's (attached to the LSEGS) to provide improved functionality to a user. For example, where an attached device is "GPS enabled," location information can be embedded into or otherwise linked to a "performance report" or other data stream from the device (which can contain performance data on the LSEGS). Such data can be collected by a networked server and utilized to analyze the performance of the LSEGS, as well as map the location of the PED. Where reports from multiple devices and attached LSEGS are being collected in this manner, the performance of an individual LSEGS can be compared to performance of other devices in the same or a similar geographic region to determine if the individual LSEGS is operating less or more efficiently than similarly positioned devices. In various embodiments, relative performance characteristics of an individual LSEGS can be provided to the remote user, along with various information and/or instructions for the user, such as instructions that the user may follow to improve his or her PED's performance and/or the energy generation of the LSEGS.

Various manufacturers of consumer electronics devices, such as smart phones and tablet computers, have provided development platforms for third-party development of application or "APPS" that provide various functional features to enhance the device. For example, Apple's iPhone™ smart phone allows for third-party APPS that are typically deployed on a web server (i.e., the Apple Store™) attached to the World Wide Web (WWW). Various APPS can be accessed from the WWW by the phone utilizing a browser (i.e., Safari™) and can be downloaded to the phone using a variety of commonly-used methods. Once downloaded and provided appropriate access to appropriate internal phone features, such applications can provide a wide variety of functions to the user.

In another exemplary embodiment, the employment of one or more mobile APPS may collect, analyze and store monitoring, regulating and/or performance modification data of an attached LSEGS (or other renewable energy sources) or any other solar panel design, which may include the provision by the portable electronic device of user-executable instructions which the user can follow to modify the performance of the LSEGS or other source/panel design to a database. The various mobile APPS may provide such storage of data in a "stand alone" configuration (i.e., without transmission of information to a remote location and/or receipt of information from a remote server) or access a remote database, a cloud storage database (i.e., where users may access data and/or the geolocate feature from a desktop and/or share this information with other non-users when the users are logged-in and authenticated), and/or might be "networked" to a server or other device that provides information that can be personalized to the individual LSEGS, other source/panel design or the device and/or performance(s) thereof, if desired. Furthermore, the stored data may be easily accessible by the mobile APP to display global comparison data based on the various users that downloaded the APP.

In various additional embodiments, one or more mobile APPS can be loaded onto a PED that is tethered or otherwise connected to an LSEGS, the one or more mobile APPS comprising an energy management and monitoring system that replicates, approximates, simulates, replaces and/or obviates many of the features provided by complex circuitry and/or energy storage components of expensive solar cell charging arrays. In addition to various status parameters relating to the energy output of the LSEGS (which may include "open circuit" voltage, "charging" voltage and/or amperage output of the LSEGS), mobile APPS may include charging scheme information particular to one or more designs and/or manufactured type of PEDS. Mobile APPS may also be provided having features that allow modification of and/or interaction with various electronic components and/or software features of a PED, which could include a mobile APP capable of altering an individual charging scheme of a device attached to an LSEGS, or by halting, resetting and/or restarting the flow of energy accepted by the PED from the LSEGS (and/or provided from the LSEGS to the PED). Various mobile APPS embodiments may include features that provide additional functionality using web-enabled features and/or server access, as will be described herein. In addition, by providing the user with information regarding the status and nature of the energy generated by the LSEGS, it may become more convenient for the user to manage the energy available for their PED and also easier to manage the LSEGS charging solution.

The incorporation and execution of various mobile APPS in support of LSEGS arrays can address various perceived shortcomings of LSEGS' arrays, including many consumer's weak understanding of the amount of energy consumed by mobile devices, their weak understanding of how solar panel chargers can equivalently address energy needs for their portable and/or mobile electronic devices (as compared to traditional centralized and/or non-renewable energy sources), and the ease with which LSEGS can be optimized by a user to achieve highly effective and rapid charging of PEDs.

In various additional embodiments, a system could include features for measuring a variety of inputs, comprising a portable electronic device, a solar panel charger connected to the portable electronic device, a server, at least one database, and a mobile APP configured to receive measurements from the PED, PED internal battery and/or LSEGS to process the received measurements to optimize functionality and/or operation of the solar panel.

In various additional embodiments, a system could include features for measuring a variety of inputs comprising a PED, a solar panel charger connected to the portable electronic device, at least one cloud-based database system, a mobile APP configured to communicate with the cloud-based system and receive measurements from the portable electronic device and/or the solar panel, and a display or other communication device (i.e., speakers, vibration features, lights or camera flash features, attached peripherals, etc.) on the portable electronic device to communicate various information, potentially including the received measurements, to a user of the LSEGS.

### BRIEF DESCRIPTION OF THE SEVERAL VIEWS OF THE DRAWINGS

**FIG. 1** depicts various components of one embodiment of an energy management and monitoring system for a low-cost solar energy generating system and associated portable electronic device;
**FIG. 2** depicts a flowchart with one embodiment of a general operation of the solar APP;
**FIG. 3** depicts a flowchart with one embodiment of a method to recognize phone and/or battery information;
**FIG. 4** depicts a flowchart with one embodiment of a method to recognize a solar panel charging device;
**FIG. 5** depicts a flowchart with one embodiment of a method to observe change in data from a solar panel charging device;
**FIG. 6** depicts a graph of one exemplary energy protection scheme;
**FIG. 7** depicts an output of one LSEGS array design, with varying voltage and amperage values;
**FIG. 8** depicts a graphical representation of exemplary charging sequences for a PED using various energy sources, with current flow into an attached PED plotted versus time;
**FIG. 9** depicts a graphical representation of another exemplary charging sequence for a PED using a LSEGS power source, with current, voltage and LSEGS temperature plotted versus time
**FIG. 10** depicts another embodiment of an exemplary charge sequence for a PED using various energy sources, showing charge (Coulombs) versus time;
**FIG. 11** depicts one alternative embodiment of a mobile APP Graphical User Interface constructed in accordance with various teachings described herein;
**FIG. 12** depicts another alternative embodiment of a mobile APP Graphical User Interface constructed in accordance with various teachings described herein;
**FIGS. 13 -15** depicts additional alternative embodiments of a mobile APP Graphical User Interface, constructed in accordance with various teachings described herein; and
**FIGS. 16 -19** depicts additional alternative embodiments of a mobile APP Graphical User Interface, constructed in accordance with various teachings described herein.

### DETAILED DESCRIPTION OF THE INVENTION

The disclosures of the various embodiments described herein are provided with sufficient specificity to meet statutory requirements, but these descriptions are not necessarily intended to limit the scope of the claims and/or the embodiments described herein. The claimed subject matter may be embodied in a wide variety of other ways, may include different steps or elements, and may be used in conjunction with other technologies, including past, present and/or future developments. The descriptions provided herein should not be interpreted as implying any particular order or arrangement among or between various steps or elements except when the order of individual steps or arrangement of elements is explicitly described.

Described herein are a variety of systems, devices, applications and methods for facilitating the generation and utilization of energy utilizing low-cost solar energy generating systems (LSEGS). Various embodiments include the employment of one or more software applications or APPS operating on a portable electronic device (PED), such as a "smart" phone, which is connected to an attached solar cell array and receives energy therefrom. In various additional embodiments, the PED can include networked or wireless communications features allowing for the transmission and/or receipt of information from one or more remotely located servers or other devices.

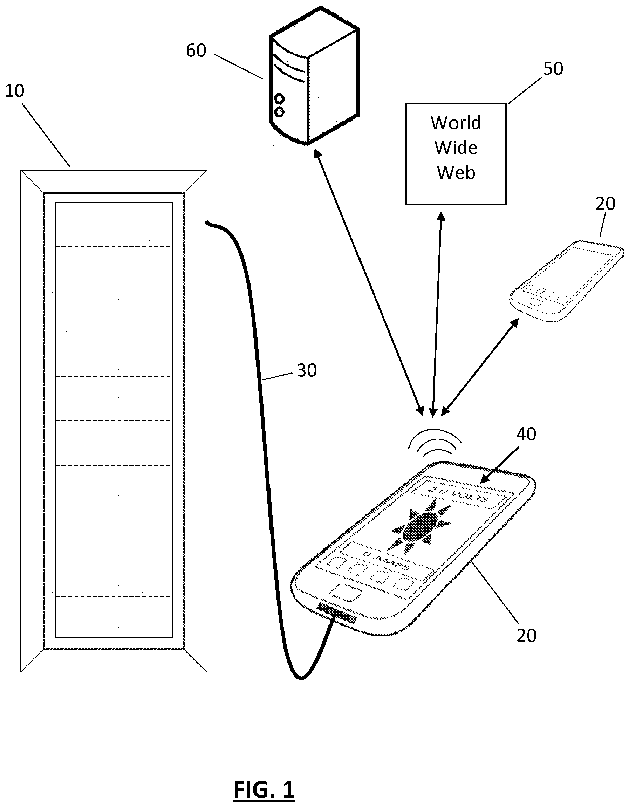

A basic component of many embodiments described herein is a low-cost energy generating device 10 (see FIG. 1), which in various embodiments will be referred to as a low-cost solar energy generating system or LSEGS. Desirably, a LSEGS device will include a minimal number and/or type of components needed for the proper generation of useful energy for a particular application or applications, which desirably reduces the cost of the necessary components for building the LSEGS. Various exemplary LSEGS designs and components are described in co-pending U.S. patent application serial number 13/832,025; entitled "A Power-Conditioned Solar Charger for Directly Coupling to Portable Electronic Devices," filed March 15, 2013. One significant feature of LSEGS devices, such as those described herein, is an absence and/or reduced amount of electronic circuitry for modifying, "conditioning" and/or controlling an energy output of the LSEGS. Rather, the LSEGS is designed and manufactured to desirably provide energy output within a specific range of characteristics (i.e., specific voltage and/or amperage output ranges, data lines and/or data line information, etc.) that can desirably be directly accepted and/or utilized by an input of the PED. The reduction in the need for "extra" circuitry (which often significantly increases the cost of the solar array because of added raw material and/or processing costs and/or manufacturing complexities) significantly reduces the cost of the LSEGS generating equipment, as well as greatly reduces the potential for failure of the solar energy generating array resulting from damage to and/or degradation to portions of such "extra" circuitry and/or connections therebetween.

### LSEGS Solar Panel System

FIG. 1 depicts one embodiment of a basic system architecture of the LSEGS solar panel system. The basic system architecture may comprise at least one LSEGS solar panel 10, at least one PED 20, at least one mobile APP 40, at least one USB cable 30, and/or at least one host database management system (DBMS - not shown).

In the disclosed embodiment, the PED 20 can receive energy from the LSEGS 10, and in many instances the PED 20 may incorporate internal circuitry and/or other features that, when properly employed (such as described herein), can be leveraged to duplicate, replicate, approximate, simulate, replace and/or obviate many of the functions provided by the "extra" circuitry in more complex solar generating systems, that has been omitted and/or reduced in the LSEGS design. For example, the PED 20 will typically include an internal battery or other energy storage device, along with internal charging circuitry and control/monitoring devices and/or software to properly control and manage energy storage within the device. In a similar manner, the PED 20 will typically include components and/or software that manages the internal flow and usage of energy within the device. Such PED internal battery components, internal circuitry, and/or software (not shown) may include a USB cable 30, battery temperature sensor, voltage converter and regulator circuit, voltage tap, a battery charge state monitor (i.e., small computer that handles charging and discharging process), and/or any combination thereof. In various embodiments, these components and/or software may be leveraged by or through the mobile APP 40 to properly communicate relevant to the usage of the LSEGS 10, which may include exchanging data with at least one host DBMS.

In one exemplary embodiment, the LSEGS solar panel system may allow for data exchange, upload and/or data communication through a plurality of methods, where the exchange of data occurs with at least one host data management system and at least one client device (PED) 20. This exchange may comprise a real time exchange or a substantially real time exchange, as well as other protocols, through the Internet, a wireless system (wi-fi), 3G/4G networks, GSM, VPN, Ethernet connection, and/or any combination thereof.

In another exemplary embodiment, the LSEGS solar panel system mobile APP 40 may be used with various PED 20 operating systems. Depending upon the installed hardware base on a PED 20, the mobile APP 40 may be resident on a variety of platforms, including, but not limited to, iOS, Android, Google, Windows, Symbian OS, Palm OS, Blackberry OS, and Ubuntu Touch OS.

In another exemplary embodiment, the LSEGS solar panel system host DBMS may be accessible via a plurality of locations to create, edit, delete, analyze, store, and/or maintain a collection of data records. Such locations may include a cloud based host database, an independent remote server database, and/or a local server (i.e., end-user) database. Alternative embodiments may include different types of database management systems, including relational, flat file based, hierarchical, network based, object-oriented database management systems, and/or any combinations thereof.

### Mobile Software Application (Mobile APP)

In one exemplary embodiment, desired utilization of an exemplary LSEGS solar panel system may include the use of at least one mobile APP 40. The mobile APP 40 herein can be an executable program or other software application that will desirably reside in memory on the PED 20, and execute various program operations to manage and/or monitor various functions of the PED 20, as well as operation of the LSEGS solar panel 10 and monitor the energy provided therefrom.

In various other embodiments, the mobile APP 40 may leverage a plurality of hardware and/or software features of components typically used with the LSEGS solar panel system, such as the USB cable 30, the PED internal battery components as described herein (i.e., battery temperature sensor, voltage converter and regulator circuit, voltage tap, and/or battery charge state monitor), and/or various of the PED components themselves (not shown) to communicate, measure, diagnose, and/or optimize the performance of the LSEGS solar panel 10 for more efficient charging of the PED 20. The operation of the mobile APP 40 may provide user-executable instructions to facilitate proper and/or optimal operation of the LSEGS 10, the PED internal battery (not shown) and/or the PED 10. The user-executable instructions of the mobile APP 40 may display performance characteristics of the LSEGS 10, the PED internal battery, and/or the PED 10 through the display of numerical, alphanumeric, audio, symbolic readings, graphical readings, text, photographic, icons, tactile (i.e., vibratory) and/or comparisons with other national databases on a PED screen.

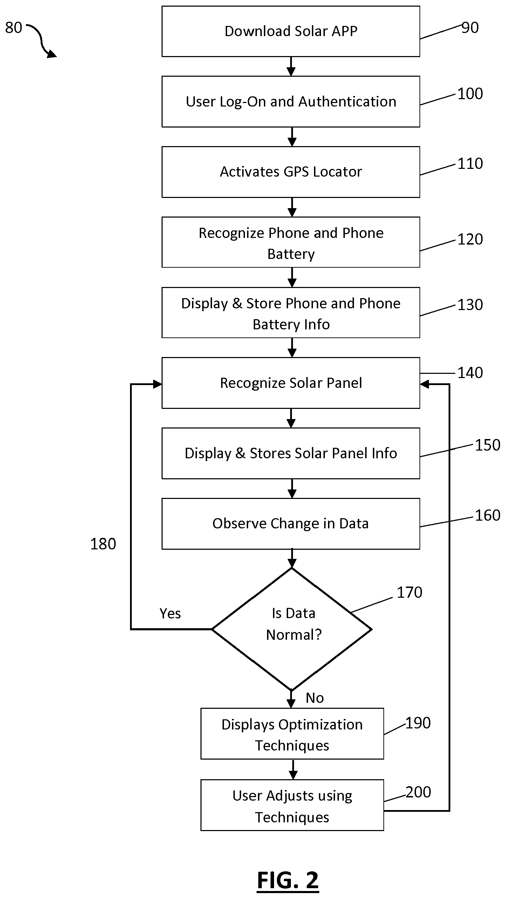

FIG. 2 depicts a flowchart of one embodiment of an exemplary method 80 effectuated by a mobile APP. In various embodiments, the user may have the ability to download the mobile APP 90. The download method may occur in various ways, including by accessing software on a storage device sold and/or provided with the LSEGS, or by activating a clickable email link and/or utilizing a scanned matrix code after purchasing a LSEGS solar panel 10, which may provide a link to the APP that is downloadable from a manufacturer website, from a cloud based application, from one of the various mobile app stores having links already resident on the PEDs (i.e., Google Play, Apple iStore, etc.), and/or any combinations thereof.

Once the mobile APP is downloaded 90, the user may provide log-on information with username and password for authentication 100 and access to the various personal profiles, databases, statistics, and/or storing of information on the at least one host database. Such information would allow the software manufacturer or the solar panel manufacturer to collect, analyze, store and maintain user specific data. Also, in a further embodiment, the mobile APP 40 may activate a GPS locator of the portable device, which could be used to "tag" a variety of sensed and/or collected data, which could include the collection, storage and analysis of specific user location, weather, mobile phone usage, solar panel usage, internal battery charging/discharging process data, and/or provide user-specific advertisements.

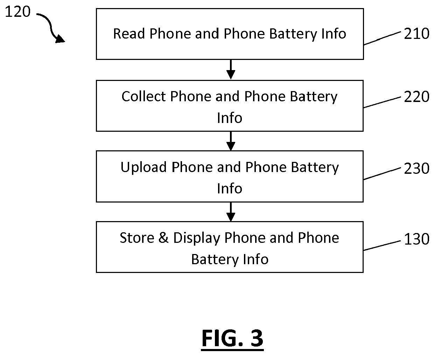

Subsequently, or simultaneously, the mobile APP 40 may begin to recognize PED information and PED internal battery information 120. As shown in FIG. 3, the mobile APP 40 may initialize the phone by reading the PED and/or the PED internal battery information 210. The mobile APP 40 could collect a plurality of PED and/or PED internal battery information 220. PED information may include service state, call state, signal level, SIM state, PED operator name, SIM Country code, SIM serial number, subscriber ID, network type, network country, network operator number, data connection state, device ID, phone type (i.e., GSM, CDMA, 3G CDMA, etc.), voicemail number, roaming, model number, phone make and/or any combination thereof. PED internal battery information might include charge status, health of battery, battery temperature, status, voltage, amperage, technology type (i.e., Li-Ion, etc.), Plug Type (i.e., None, AC, USB, Bluetooth, Solar, etc.), amperage flow (in mA or in percent), time, date, battery use actual or average, total time to charge for plug type, discharge time, charging port type (dedicated charging port, direct charging port, charging downstream port, standard charging port, standard downstream port) and/or any combinations thereof. All PED information and/or PED internal battery information might be displayed in numerical, textual, graphical, statistical, and/or a list of actual historical values, where the PED information and/or PED internal battery could be uploaded 230, stored in at least one host DBMS and/or displayed on a graphical user interface 130.

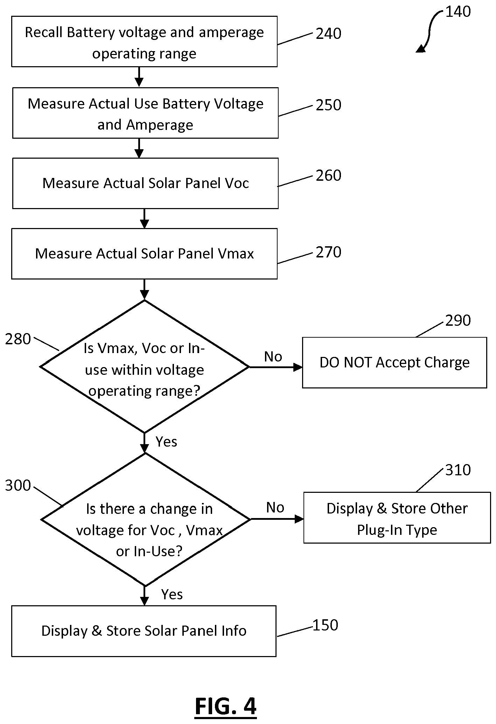

In another embodiment, the mobile APP 40 may include executable code that recognizes the LSEGS solar panel 140. FIG. 4 depicts a flowchart of one embodiment of the recognition of an exemplary solar panel 140, which may comprise at least one of the steps of recalling PED internal battery voltage and amperage operating range 240; may measure actual use PED internal battery voltage and amperage; may measure actual LSEGS Voc; may measure actual LSEGS Vmax; may determine whether Vmax or in-use voltage is within port voltage operating range; may determine whether there is a change between LSEGS Voc and LSEGS Vmax, or In-use voltage; may display other plug-in type, LSEGS solar panel information, or may not accept charge.

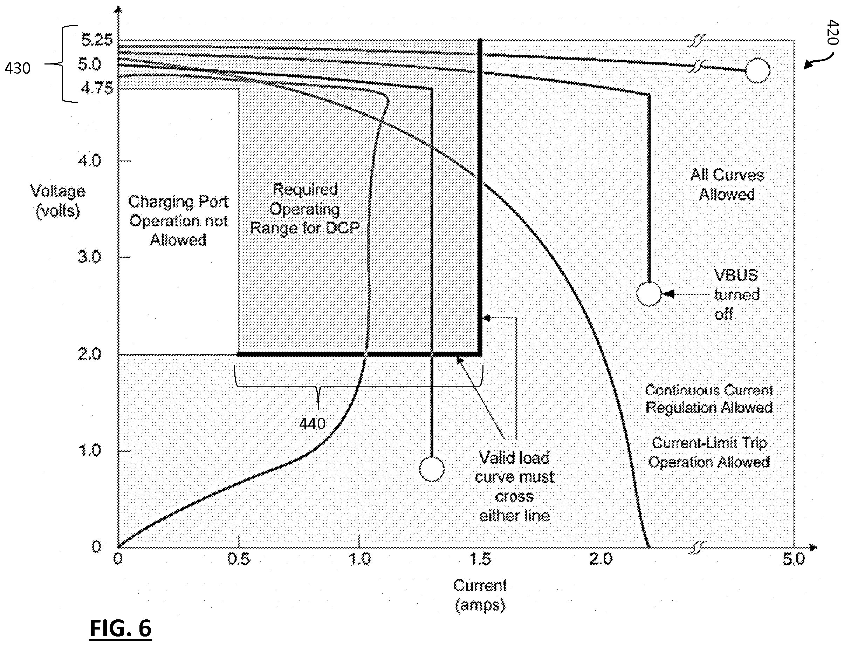

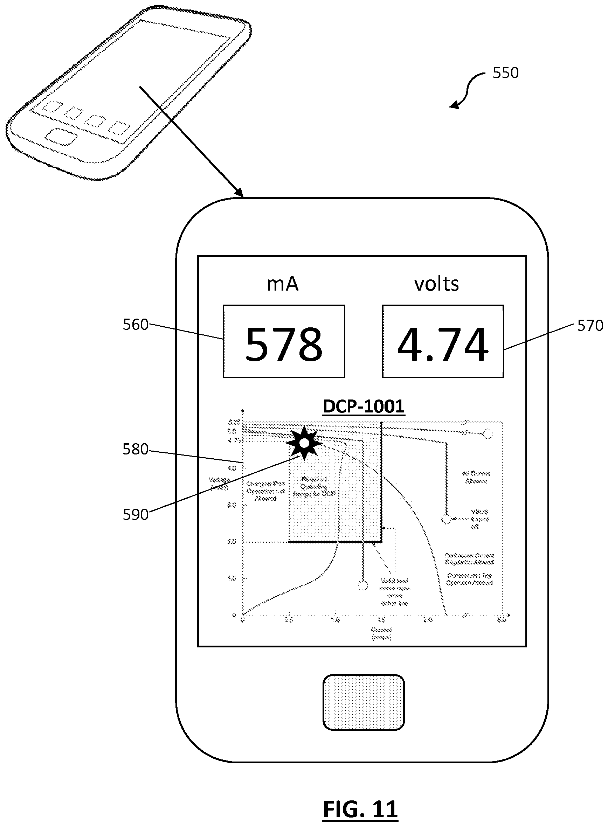

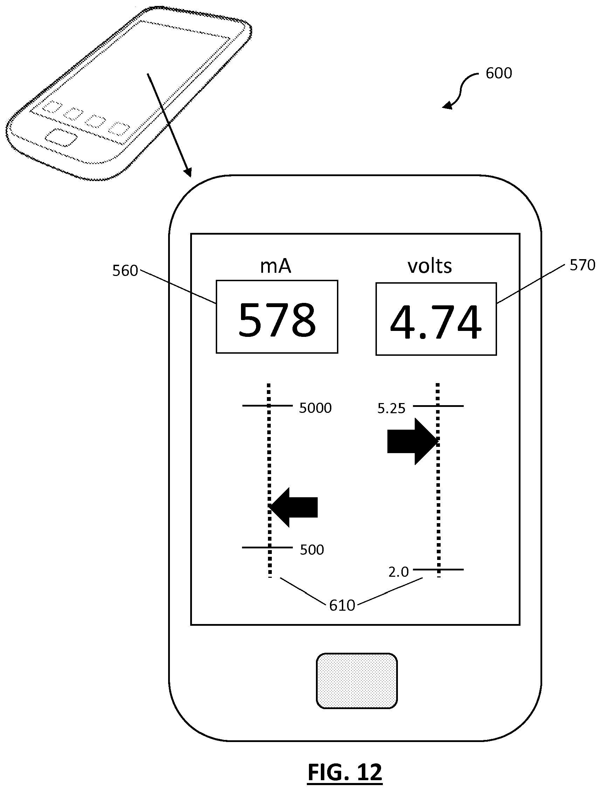

The mobile APP 40 may recall PED and/or PED internal battery voltage and amperage by measuring the actual voltage or amperage or by extracting the operating voltage and amperage from a change in capacity over time and/or wattage, or this information may be obtained by extracting standard factory information, and/or this information may be obtained from the PED internal battery "smart" circuitry (i.e., an internal microcontroller, applications processor and/or a dedicated IC). If desired, various exemplary voltage and/or amperage operating ranges may be ranges that can be accepted and/or provided by at least one of a variety of "port types," which can include dedicated charging ports (DCP), standard downstream ports (SDP), charging downstream ports (CDP) and/or any combinations thereof (i.e., the "handshake"). For example, FIG. 6 depicts a graphical representation of one embodiment of a DCP operating graph 420. The operating voltage and amperage ranges for this DCP port may have an operating voltage range of 4.75 volts to 5.25 volts (with the range represented as "430"), and/or an operating amperage of 0.5 amps to 1.5 amps 440. Since each port type can be unique in one or more characteristics of a given operating voltage and amperage ranges, various embodiments of the mobile APP 40 may include features to detect and/or understand which type of LSEGS may be connected to the PED to provide a proper charge. Such data may be displayed textually, graphically, audibly, pictorial and/or any combination thereof within the mobile APP 40 interface (see FIGS. 11 and 12). If desired, acceptable voltage and amperage operating ranges may be stored in a DBMS.

In various embodiment, the mobile APP 40 may include features that attempt to optionally measure battery voltage and amperage while the PED is currently "in use." The mobile APP 40 may access in-use voltage and/or amperage of the PED by measuring the actual voltage or amperage, by extracting the voltage and amperage from a change in capacity over time and/or wattage, may be derived and/or obtained from standard factory information on the PEDe, and/or may be obtained from the PED internal battery "smart" circuitry (i.e., an internal microcontroller, applications processor and/or a dedicated IC). The in-use voltage and amperage may assist with detection of the optimal and/or available ports for use in charging the PED. The mobile APP 40 may use the in-use voltage and/or amperage to analyze whether there is a change in voltage and/or amperage when a LSEGS connects to the PED. Such changes may be measured by absolute changes (increase, a decrease and/or no change in in-use voltage or amperage), by statistical changes (average, mean and/or median over time) and/or by calculating graphical changes (i.e., slopes). For example, one embodiment of port detection feature may include the mobile APP 40 having a feature that, when a LSEGS 10 is connected to a PED 20, the APP 40 can "recall" prior operating voltages of the device (which may include voltage during a prior charging sequence) to desirably understand which type of port and/or voltages/amperages would be compatible (and/or optimal) with the PED. Once an in-use voltage is measured (i.e., through the internal microcontroller, applications processor and/or a dedicated IC) and displayed, connecting the LSEGS to the PED may cause a change in in-use voltage or amperage that is specific for the type of port. The change in in-use voltage or amperage may be compared to the DCP port operating voltage 430 and/or amperage 440 (or any other port) ranges to verify or confirm the type of port. This change in voltage may be read by the mobile APP 40 through the internal microcontroller, applications processor and/or a dedicated IC to indicate that the charge has been accepted, and the PED may be capable of detecting and/or displaying the specific LSEGS information (i.e., model number of solar panel, whether successful charging has taken place, length of charging time, V_{open circuit} or V_{oc}, Vₘₐₓ/Vₘᵢₙ, current Iₘₐₓ, array alignment, number or generating capacity of panels connected, panel tilt, solar incidence, GPS location, altitude, time of day, carbon credit generation, Pₘₐₓ, watts, etc.). Should the change in in-use voltage and/or amperage not at least meet the minimum operating voltage 430, then the mobile APP may detect and display an information message such as "no charge accepted," or the system may display information about some other type of charger information (i.e., displaying that the energy source is an AC or Bluetooth charger).

In various additional embodiments, the mobile APP 40 may optionally measure LSEGS Voc (open circuit voltage) 260 and LSEGS Vmax 270 (max voltage) to detect the type of port (see FIG. 4). The mobile APP 40 may access the LSEGS Voc 260 and/or the LSEGS Vmax 270 by measuring the actual voltage or amperage transmitted by the LSEGS (and/or received by the PED), by extracting the voltage and amperage from a change in capacity over time and/or wattage, may be obtained by standard factory information, and/or may be obtained from the PED internal battery "smart" circuitry (i.e., an internal microcontroller, applications processor and/or a dedicated IC).

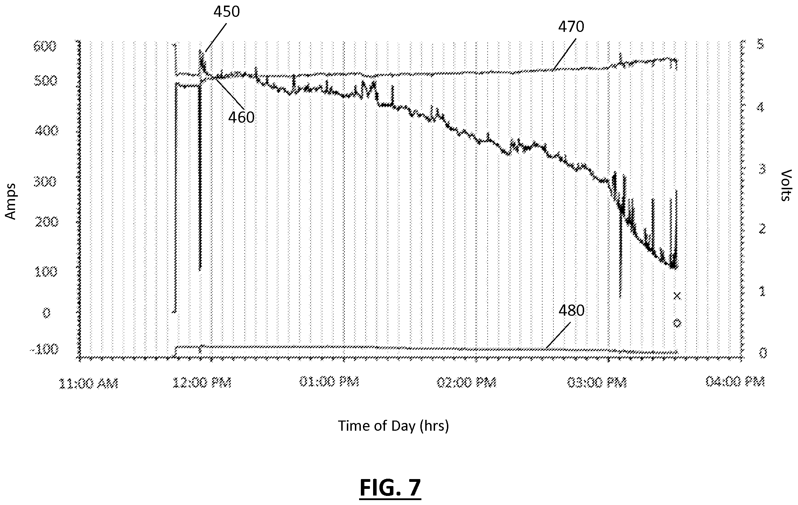

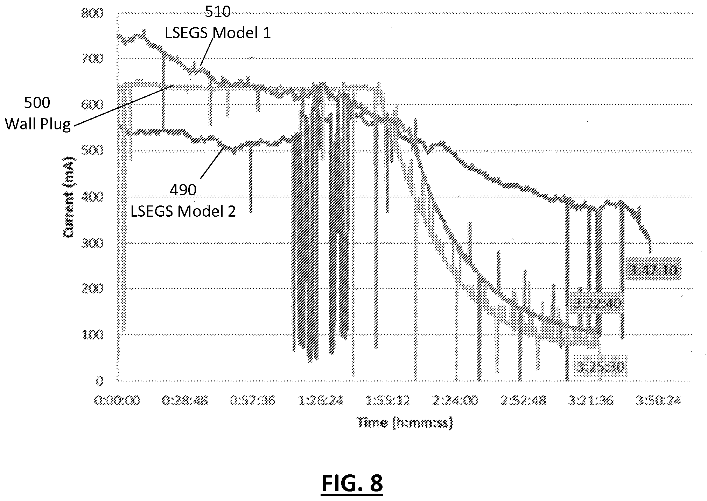

For example, the LSEGS described in the '025 patent may comprise a solar panel with a USB receiver that includes a predetermined port type that may be established using hardware modifications, and the "smart" circuitry within the PED internal battery may be able to detect the type of port (not shown). In one embodiment, an LSEGS may include feature that emulate a DCP hardware charging port, desirably to charge a plurality of PEDs and a specific Voc. Once an LSEGS is connected to a PED, the mobile APP 40 and/or the PED internal battery may be able to detect the DCP port type by using a logical port detection method through the internal microcontroller, applications processor and/or a dedicated IC of the PED internal battery. The logical port detection method may be activated within the PED internal battery when the PED is attached to the LSEGS. The LSEGS Voc may power the U1 switch (microprocessor-supervisory circuit) and the device's microcontroller to initiate the PED internal battery detection scheme (i.e., the "handshake"). A specific logic algorithm within the U1 could place it into detect mode, to read the USB receiver's D+ / D- line, where the D+ line is pulled up to the PED internal battery system logic voltage through a known resistance and D- is pulled to GND through known resistance (resistance may be higher than D+ uses). If a DCP is connected (which may have D+ shorted to D-, or up to 200 ohms), then D- could read "high." If either a SDP or CDP is connected, D- and the detect output could read "low." In various embodiments, a mobile APP 40 could include one or more features which could measure whether the D- line is high or low, to determine the port type by accessing the PED internal battery microcontroller, applications processor and/or a dedicated IC. Also, subsequently following the LSEGS connection to the PED, the Voc 450 may have a change in voltage that leads to Vmax 460, such as shown in FIGS. 7 and 8. Such changes may be measured by absolute changes (increase, a decrease and/or no change in Voc 450 to Vmax 460), statistical changes (average, mean and/or median over time) and/or by calculating graphical changes (i.e., slopes). If desired, the mobile APP 40 could include features to measure and verify whether Voc 450 and/or Vmax 460 are within the PED internal battery operating ranges to accept and/or maintain charging of the LSEGS with its predetermined port. If Voc 450 and/or Vmax 460 are within the PED battery operating ranges, the mobile APP 40 may display the specific LSEGS information (i.e., model number of solar panel, and whether successful charging has taken place, Voc, Vmax, Vmax, Vmin, current Iₘₐₓ, array, Pₘₐₓ, watts, and/or any combination thereof). In addition, the current may begin to flow to charge the PED 20, where the mobile APP 40 may detect, measure and store such information for future analysis. The mobile APP 40 may include one or more features capable of detecting the specific LSEGS information, where each LSEGS may have a unique signal signature voltage and/or amperage 490 (or any other energy characteristic), 510, such as shown in FIGS. 7, 8 and 10 (as compared to the amperage for a wall plug charger 500). Should the change in Voc 450 and/or Vmax 460 not at least meet the minimum operating voltage 430 or minimum amperage 440, then the mobile APP may detect and display a message such as "no charge accepted" or might display other type of charger information (i.e., AC or Bluetooth charger). In various alternative embodiments, the mobile APP 40 may utilize the LSEGS amperage to measure the signal changes, and/or the mobile APP 40 may combine both LSEGS Voc, Vmax and/or amperage.

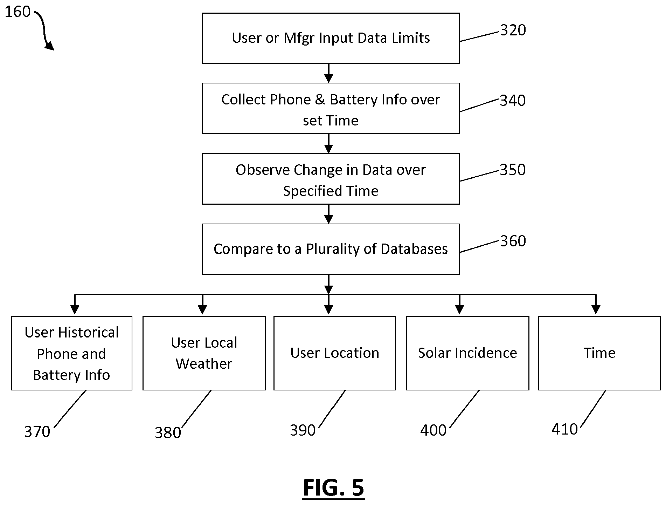

Once the energy generated and provided from the LSEGS has been "accepted" by the PED, the mobile APP 40 may begin to collect and store a variety of relevant information. The mobile APP 40 may include one or more feature that can analyze the data, which could include identification of one or more changes in data 160 relevant to the LSEGS (see FIG. 2 and FIG. 5). Such information may include data regarding at least one of user or software manufacturer input data limits 320, PED and/or PED internal battery information 340. The various information may be collected, stored and/or analyzed to observe a change in data over a specified time 350. Software manufacturer input data limits 320 may include model number of solar panel, average (or other statistical indicia known in the art) length of charging time for the specific model as shown in FIG. 8 (Model 1 510 and Model 2 490), Voc, Vmax, Vmax, Vmin, current Iₘₐₓ, array, Pₘₐₓ, watts, and/or any combination thereof. The mobile APP 40 may include features that transmit various data, which may include various changes in data over a specified time 350, to an external database for collection by and/or comparison with data within the external databases 360 (such as shown in FIG. 5), where the external databases 360 may include at least one of PED user input data (not shown), PED user historical data and/or PED internal battery information 370, PED user local weather 380, PED user location 390, solar incidence 400 (i.e., through the National Solar Radiation Data Base (NSRDB), national renewable energy laboratory (NREL), NASA observatory satellites, World Radiation Data Center (WDRC), Baseline Surface Radiation Network (BSRN), US National Oceanic and Atmospheric Administration (NOAA), Cooperative Network for Renewable Resource Measurements (CONFRRM), and/or any combination thereof), time 410 (i.e., which may include actual time, time of year, month and/or date, and/or any combination thereof), and any other databases known in the art. Alternatively, the PED may access such external databases and receive data from such external databases for comparison within the mobile APP on the PED.

In various additional embodiments, the mobile APP 40 can include features that facilitate the combination of various types of data collected from the LSEGS 10 with internally-derived information from the PED 20 (i.e., GPS-related data and/or cell-tower location triangulation), the plurality of external databases 360 and/or user-entered data, and employ networking and/or wireless communication capabilities of the PED 20 to send and/or receive relevant data from remote servers and/or other equipment (i.e., other PED users) to achieve a variety of objectives. In various embodiments, all features of a mobile APP 40 may be resident on the PED 20, while in other embodiments various features may be distributed between the PED 20 and a remote server, while in still other embodiments the features of the APP may be primarily located on a remote server with the mobile APP primarily employed on the PED as a data transfer and display mechanism.

### Mobile APP Energy Optimization

One significant improvement provided by the various applications described herein includes one or more features capable of employing and/or utilizing various external sensors, PED sensors, and/or other features of a portable electronic device (PED) 20 attached to a LSEGS 10 to detect, identify, analyze and communicate relevant information to a user, so as to optimize and/or improve the operation of the LSEGS. This energy optimization of the LSEGS charging performance may include a separate APP module that functions within the mobile APP 40, where all data collected within this energy optimization module can be stored and/or updated in at least one DBMS, with various embodiments capable of rendering the mobile APP a "smart" or "learning" APP.

In one exemplary embodiments, the mobile APP 40 may include a feature that can collect data and/or identify changes in collected data 160, and compare such information to one or more external databases 360, with an objective to analyze and evaluate the charging performance of the LSEGS 10. The comparison may reveal whether the observed data is normal or abnormal 170 (see FIG. 2). Should the comparison reveal that the data is abnormal, the mobile APP may include a feature that provides recommendations to the user to optimize the charging experience 190 (see FIG. 2). In response to these recommendations, the PED user may adjust the LSEGS using the recommendations 200 to improve the charging experience. If the comparison of data is normal, then mobile APP can notify the user of such fact (or can refrain from such notification), with the PED user continuing to charge their PED with the LSEGS as normally planned.

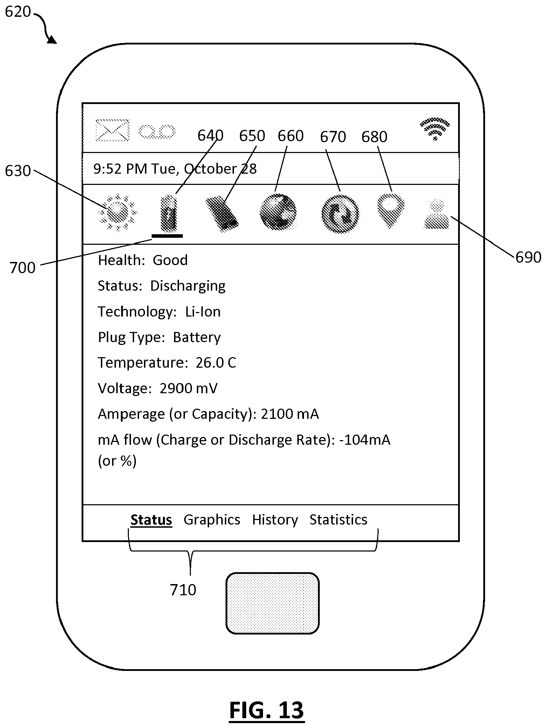

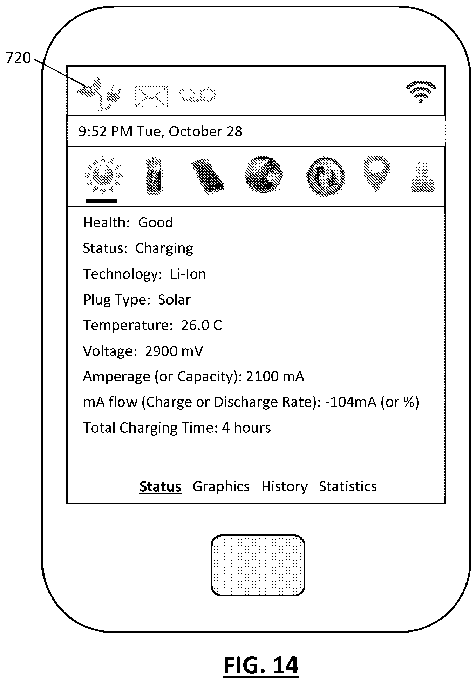

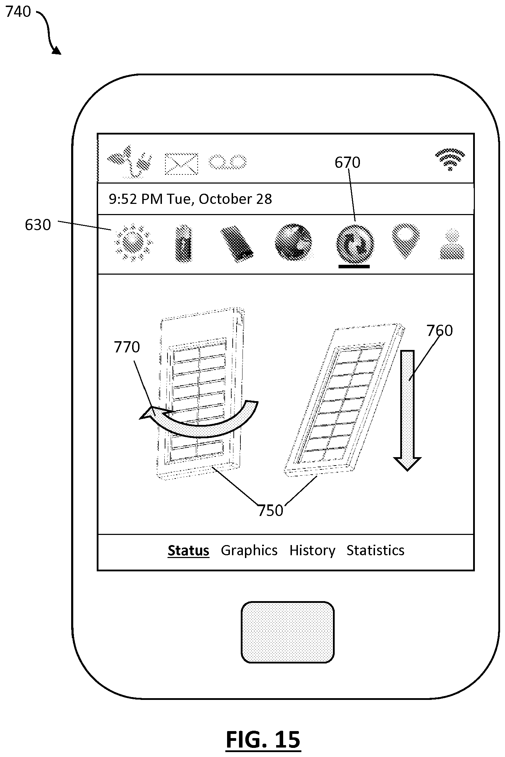

If desired, one embodiment can include an indicator on the mobile APP GUI which can graphically demonstrate the voltage and/or amperage and/or wattage values of the energy being output by the LSEGS (and concurrently being received by the PED) using text (see FIG. 13), graphical indicator (see FIG. 12) or pictorial (i.e., the glowing point or "sunlight" icon on FIGS. 11 and 13) overlaying an energy protection scheme graphic on the PED screen, which can be periodically updated (i.e., every ¹/₁₀ second, ¼ second or ½ second or every second or every 2, 3, 4, 5, 6, 7, 8, 9, 10, 15, 30, 45 or 60 seconds, 5 minutes, 10 minutes, or every 24 hours). Such data can be collected over time and/or stored in a DBMS. Depending on the time sampling period, the data over time can be accessed to be analyzed (which could include summarizing by employing various statistics known in the art) and compared to data within one or more external databases. Depending upon the observed data, one exemplary reading and comparison might reveal that the analyzed and compared data may have a higher than average charging time or lower than average current flow (for charging or discharging). If desired, the mobile APP 40 may access various data from the external databases to determine whether the abnormal reading is due to a user-correctible cause (i.e., the LSEGS panel is misoriented), or whether the abnormal reading in due to a non-user-correctable problem (i.e., the incoming solar energy is partially blocked because it is a cloudy day at that particular location. In other examples, the data can include comparisons to a wide variety of information, including the time of day where the solar incidence may be highest or lowest, as well as the GPS location of the user. All of the collective information can be analyzed by the DBMS processor to compile a set of recommendations, which may include cleaning the panel of the LSEGS and/or adjusting the orientation and/or tilt of the LSEGS to improve charging performance of the LSEGS. Such set of recommendations may include moving the device into direct sunlight (not shown), rotating (see FIG. 15), tilting (see FIG. 15), changing GPS location (higher elevation, cooler location, and/or best location where most LSEGS users get faster charge). As the LSEGS is manipulated by the PED user, the mobile APP 40 can continue to collect and/or sample the data and update the data over time, which could include local data storage and/or storage in at least one DBMS, and continue to conduct various comparisons to the external databases until improvement of the charging performance has been completed. The mobile APP 40 may optionally display the updated various changes to the battery temperature, voltage and/or amperage generated by the LSEGS, which is desirably reflected in the GUI (i.e., by movement of the graphical indicator in FIG. 11, sliding of the various arrow indicators in FIG. 12 and/or alteration of the numerical values in the boxes of FIGS. 13 and/or 14), thereby allowing the user to understand how manipulation of the LSEGS alters and/or optimizes the characteristics of the generated energy for recharging the PED/battery (i.e., if the user gets more sun to "hit" the LSEGS, more current should be flowing for charging). Furthermore, the mobile APP 40 may also evaluate the optimization recommendations by accessing the various sensors within the PED 20, such as the accelerometer and/or the gyroscope. These sensors within the PED 20 may be used to assist with moving the LSEGS into a more-optimized position, which could include the user orienting the PED 20 rather than the LSEGS, and then orienting the LSEGS to "match" the PED's orientation. The user may move the PED according to the recommended orientation independently of the LSEGS or attach the phone to the LSEGS (or hold the PED against one or more surfaces of the LSEGS) while orienting the phone. Once the PED 20 reaches the proper orientation, the mobile APP 40 may access the sensors to display that the PED (and the LSEGS) has reached proper orientation. The proper orientation may also be verified by the sampling of temperature, voltage and amperage. In various alternative embodiments, the GUI could include one or more "meters" and/or any "hot or cold" cues or other simulated indicators that reflect the voltage, amperage and/or power of the energy output from the panel and/or accepted by the PED 20 (not shown). In other alternative embodiments, the user could employ and/or repurpose the camera or other sensor feature of the PED to "observe" the LSEGS, with the mobile APP providing "real time" feedback on optimal positioning based upon data "observed" by the sensors and analyzed by the mobile APP or by a remote server.

### Mobile APP Energy Conservation

In another exemplary embodiment, the mobile APP may include an energy conservation module that functions within the mobile APP. A PED 20 may be attached to a LSEGS 10 to detect, identify, analyze and communicate relevant information to a user so as to assist users with managing and/or conserving stored energy in their PED and/or supplemental energy storage devices.

For example, the mobile APP 40 can analyze the amount of stored energy within a battery or other onboard storage device, and can provide the user with an estimate of battery life for use under a variety of conditions. Where an LSEGS 10 has been connected to a PED 20 and is providing energy, the mobile APP 40 can provide a running total of energy provided by the LSEGS 10, the amount of energy stored in the PED 20 and/or an attached energy storage device (which may or may not be contained within the PED), and/or a running update of energy currently being used by the PED. Where the PED 20 is using more energy than is being provided by the LSEGS 10, the mobile APP 40 may inform the user of this condition, and can provide an estimate of energy remaining based on a current usage scenario. In various embodiments, it may be more desirous for the PED to utilize energy directly from the LSEGS 10, rather than utilize battery energy, and the mobile APP 40 may include one or more features that access the PED and "shunt" energy from the LSEGS to the PED 10 directly, desirably bypassing the battery and/or any storage circuits within the PED 20.

In various additional embodiments, the mobile APP 40 may include a diagnostic evaluation feature. An exemplary mobile APP 20 diagnostic feature could conduct a diagnostic evaluation on the PED, the PED internal battery or some other energy storage system within the PED, and provides a report to the user of the health of the battery and the Universal Energy Management (UEM) circuit. If desired, the diagnostic evaluation feature could cause the PED to execute an automated or user selectable diagnostic evaluation (which may function in a manner similar to a virus or other software, if desired) upon an initial execution on the device (i.e., during "unpacking" of the APP) and/or before every execution. It may notify the PED user of the various active programs (as well as other features such as wireless energy/Bluetooth energy consumption) and energy consumption thereof so that the user can manage the energy consumption of the PED, including an ability to turn off (i.e., manually, semi-automatically, and/or automatically) un-used and/or noncritical applications to optimize performance and/or conserve energy. The mobile APP diagnostic feature may trace and compare a user's "other" mobile application usage to see if there are any specific actions that the user can take to save battery life (i.e., deactivating or uninstalling mobile applications that same battery discharging time, charging time and/or battery life). In various embodiments, the mobile APP diagnostic feature might also collect and store data over time to compare with other PED users who have similar combination of mobile applications. Furthermore, the diagnostic feature may be resident and/or durable programming or virus-type software activation and/or scanning. Alternatively, the mobile APP diagnostic feature may perform repairs to the UEM, where desired and/or required, to revive performance and vitality for robust energy use. By keeping the Universal Energy Management (UEM) circuit healthy and managing the phone's/PED'S energy, these features could extend the life of the smart phone/PED, while potentially saving time, money and even saving lives. The mobile APP may include features that alter the performance of the PED based on the power supplied to the PED by LSEGS, with various "energy management schemes" which could change based on the amount of energy supplied by the LSEGS and/or depending upon the amount of stored energy available in the PED. If desired, the APP could include a wide variety of "factors" to determine an appropriate energy control scheme, which could include the use of calculations of remaining solar energy available for the day (i.e., where the user is charging in the morning or towards the end of the day).

In another embodiment, the mobile APP 40 may include a signal transmission management feature. Such signal transmission feature could include mobile APP and/or PED user management or control of the signal transmission energy levels and/or radio wave characteristics from the PED, where such control is feasible and accessible to the mobile APP and/or PED user, potentially relating to a limited amount of available stored and/or useable energy in the PED and/or provided by an attached LSEGS (i.e., reducing PED transmission energy to conserve available energy when transmission towers are nearby) and/or minimum PED signal transmission energy requirements (i.e., ensuring the use of at least a minimum transmission energy to provide adequate signal reception by nearby transmission towers).

In another embodiment, the mobile APP 40 may include an energy consumption feature. The energy consumption feature may provide energy consumption information, energy saving options, and/or reprogram or modify capabilities of the PED 10 and/or PED internal battery. The energy consumption feature may provide a live graph showing exactly and/or an approximation of the amount of energy being used and how much longer the PED will stay on (i.e., the PED won't run out of stored energy within a certain time and/or won't reach a pre-determined remaining stored energy set-point that deactivates and/or limits various PED features from operating) based on the current energy consumption, reports brightness setting and offers other user-controllable and/or PED-controllable options to save energy. In addition, the mobile APP energy consumption feature may analyze, calculate and/or display net-metered usage of PED energy consumption versus energy gain from the LSEGS in "real time" or over a user-defined period. Furthermore, the energy consumption feature could provide energy saving options that alter/reprogram the charging profile, software and/or operating system of the PED and/or PED internal battery. The new settings can be recommended to the user, where the user may replace the original consumption options provided by the PED manufacturer with a more energy efficient program. Such settings may be temporary, semi-permanent, permanent or continuously updated as improvements are observed. If desired, the energy consumption data and analysis may provide the PED user with live energy consumption reporting data, including data collected from the LSEGS charging device, and the mobile APP could upload the various types of data to a cloud server or other data storage and analysis server for "big data" analysis.

In another embodiment, the mobile APP 40 may include charging type features. The charging type features may identify three or more charging rates, including Bulk, Absorption and/or Trickle. In various embodiments, software functions may be provided that permit various levels of energy flow to be accepted by the PED 20. If desired, the mobile APP charging type feature can alert the user of the battery state of charging, including Bulk Absorption and/or Trickle charging, as it reaches the various charging levels. Where the user has two or more PED's available for charging, it may be more efficient to "bulk charge" each PED to a desired level, rather than spend time at a "trickle charge" rate on a single PED. If desired, the mobile APP charging feature might allow the user to keep the battery in the Bulk state of charge more often, and possibly extending the life of the battery, as well as monitoring the charging of the two or more PED's. In various embodiments, speeding up of the charging rate on the device and/or extending the life of the battery might be accomplished. If desired, a user-selectable "express charge" function could potentially save time, money, and/or improve convenience.

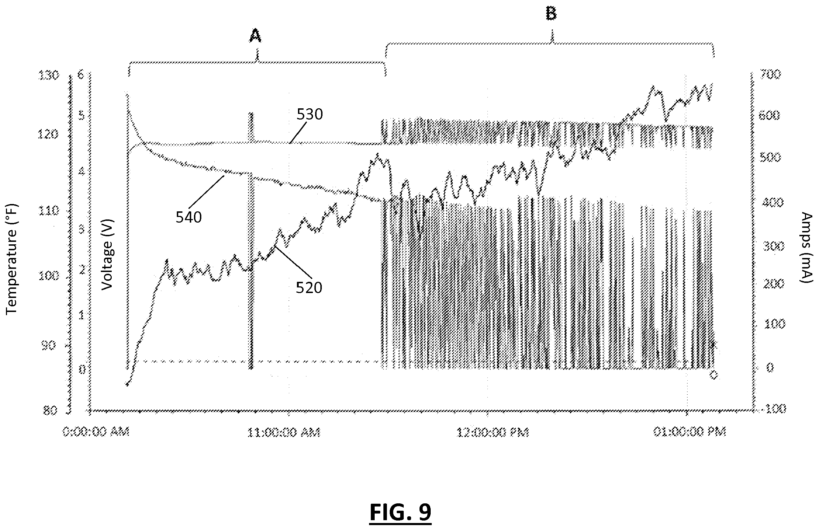

In various embodiments, the mobile APP charging type feature could provide information and/or instructions to optimize LSEGS 10 performance as it relates to the desired charging parameters for a given charge rate, which may differ for a given charging scheme depending upon the charging rate encountered (i.e., the charging parameters for trickle charge may be "tighter" that those for bulk charge in the same charging scheme, while the reduction in accepted current flow by the PED 20 during trickle charge may initiate an undesired "spike" or other voltage increase in the voltage supplied by the LSEGS 10). Alternatively, the mobile APP charging type feature may provide a live graph, such as with an X-Y slope graphical feature, depicting the life of the remaining battery output and potentially additional suggestions on extending the lifetime of the energy source. Furthermore, the mobile APP charging type feature may also notify a PED user when a PED is idle, when an attached LSEGS has fully and/or partially charged a PED (i.e., such as when a "bulk to topping charge" or "topping to float charge" threshold has been reached) or reminds the user to charge the PED. For example, FIG. 9 depicts a charging sequence where an attached LSEGS transitions from "A" (a bulk charge zone) to "B" (a non-bulk charge zone such as a topping charge and/or trickle charge zone).

In another embodiment, the mobile APP 40 may include a weather conditions feature. The weather conditions feature may obtain different data inputs based on use, weather, location, time of day, condition of energy storage device (i.e., low battery) to predict duration of available charging times and/or required charging times to reach a desired energy storage level. For example, the APP may have access to the National Oceanic and Atmospheric Administration (NOAA) database which may focus on the conditions of the oceans and the atmosphere. The NOAA information can warn of dangerous environments, such as the national weather, weather forecasts, charts, sea conditions and weather and sky conditions. Accessing and/or monitoring this type of data could allow the APP to provide feedback for assessing and predicting climate, sky conditions and/or weather patterns, to desirably optimize the solar panel for faster recharging of the PED rechargeable battery. Such feedback may include optimal time of day to recharge, unexpected cloudiness or rain, solar incidence, sun intensity by altitude, and/or tilting of solar panel, etc.

In another embodiment, the mobile APP 40 may include a charging port simulator feature. The charging port simulating feature may be able to simulate that the charging device/LSEGS is a Dedicated Charging Port (DCP), a Charging Downstream Port (CDP), a Standard Downstream Port (SDP) or other type of connection, the selection of which might desirably speed up and/or slow down the charging rate of the device (which may include the amount of energy received by the device for a given charging scheme) and/or extend the life of the battery.

In another embodiment, the mobile APP 40 may have a "renewable resource" feature. The renewable resource feature can assist a mobile phone, PED or tablet user to identify and/or "understand" the renewable nature of the LSEGS energy source, optionally providing analytical data to the smart phone, PED or tablet to companion the LSEGS array. This feature may be displayed in an icon (i.e., a flower which grows as renewable energy is generated) within the mobile APP GUI and have the data accessible by the PED user.

In other embodiments, the mobile APP 40 may have a bypass auxiliary electronics feature. The bypass auxiliary electronics feature may be able to recognize associated PED, PED internal battery, and/or the LSEGS (with optionally integrated circuits and PC boards) that have the highest energy consumption. The bypass auxiliary electronics feature may provide recommendations to the auxiliary electronics that are consuming lots of energy and recommend to bypass the electronics to the auxiliary electronics that are not consuming lots of energy.

In another embodiment, the mobile APP 40 may include a solar cell alignment feature. The solar cell alignment feature may provide live or "real time" feedback to the user (using the PED screen or speakers, for example) as to the energy output from the LSEGS to allow the user to correct the orientation and/or azimuth of the LSEGS for optimal energy gain. In one example, the APP can display or recommend optimum solar cell alignment to maximize charging time. It may include latitude or longitude information from GPS or other sources to calculate the correct solar incidence angle for the local geographic region. The APP may also recommend which direction the user should turn the solar panel or tilt the solar panel. LSEGS orientation optimization could be based on amps, such as where an increased angle of the panel might accommodate an increased solar insolation (and/or increase in the radiation the LSEGS receives), with adjustment of the azimuth increasing and/or decreasing the amps produced. Such features could help the user to gain the full energy from the sun by directing orientation and/or speeding up charge. In various embodiments, the APP can direct solar orientation of the LSEGS array by the user (i.e., vertical tilt of the LSEGS array and/or horizontal angulation of the array and/or various combinations thereof).

### Mobile APP Thermal Management or Optimization

In another exemplary embodiment, the mobile APP may include a thermal management and/or optimization module that functions within the mobile APP. A PED 20 may be attached to a LSEGS 10 to detect, identify, analyze and communicate relevant information to a user so as to optimize and/or improve the thermal stability to increase the charging performance.

Commonly-available portable solar energy generating arrays are typically static devices, in that a user does not generally manipulate the array on a consistent or frequent basis, nor do such arrays typically provide "feedback" or other indications regarding performance to the user. Rather, the standard solar panel is simply placed in sunlight and may be attached to a user's device, and the array assembly is left alone, with the user trusting that sunlight striking the array over time will recharge their device. In order to accommodate such "static" use, solar arrays typically include various complexities of circuitry (including energy conditioning and blocking circuitry to prevent reverse current flow) as well as onboard energy storage devices that seek to accommodate a wide range of operating and/or light level conditions.

However, the LSEGS 10 disclosed in the '025 patent describes various "highly-specialized" or "particularized" solar panel system designs. Such LSEGS 10 designs allow the manufacturer to discard some or all of the complex "extra" circuitry often part of a solar array assembly, in exchange for creation of a solar array that provides energy particularized for a specific PEDs. Not only does such a design change significantly reduce the component and raw material cost of a given LSEGS design, but it also significantly reduces assembly cost, can minimize the footprint of the assembly, can reduce the need for thermal management of thermally sensitive electronic components and can allow for highly impact-resistant, waterproof encapsulation of the entire LSEGS assembly. The resulting LSEGS assembly can be highly durable and useable for an extended period of time, which can exceed 25 to 50 years of renewable energy production for a single unit. In addition, the waterproof nature of the LSEGS arrays described herein allows the LSEGS array itself to be partially and/or fully immersed in water, if desired, which can significantly reduce the array temperature (and significantly increase energy generation efficiency), while still allowing energy generation and transfer to an attached PED. The waterproof features can also facilitate use of the LSEGS in high humidity and/or "wet" environments.

Furthermore, the specialized design of the LSEGS 10 can often leverage the "smart" circuitry of the PED and/or the PED internal battery "smart" circuitry, where the mobile APP 40 may access the information available from the PED and/or the LSEGS to provide a variety of indicators, consistent and/or periodic feedback to the user or remote servers, various reminders and/or user-executed instructions that facilitate the user's utilization of an LSEGS to optimize the PED charging experience.

In addition, one or more APPS can be provided that give feedback from the performance of the PED/LSEGS when charging, allowing the user to determine if the PED is charging optimally, slowly, or in a damaging way. If desired, the APP can include features that protect the USB-connected device (or other connection techniques and systems well-known in the art) from electrical damage. In various embodiments, the APP could provide the user with instructions on how to protect their USB device/PED from sun and/or thermal damage.

For example, FIG. 9 depicts a graphical representation of an LSEGS voltage 530 and amperage 540 function with rising temperatures. The temperature 520 is rising throughout the day. This temperature 520 may be accessed by at least one of the many external databases that the mobile APP 40 can communicate with and retrieve/recall information for the specific time of day. Alternatively, the mobile APP may also use the PED internal battery IC thermal regulation to determine the temperature of the battery that may assist with reduction of charge current during temperature extremes. The PED internal battery IC thermal regulation may output battery temperature and may be used to approximate daily local weather temperature for the specific user's location. The approximation may be achieved through various statistical methods known in the art, such as extrapolation, calculating a linear correlation and/or transformation to estimate daily outdoor weather. Furthermore, the mobile APP may also attempt to retrieve/recall temperature information from the PED's that may have barometer, hygrometer and ambient temperature sensors integrated within the PED.

Once the mobile APP thermal management and/or optimization module is collecting LSEGS voltage 530, LSEGS amperage 540 and temperature 520, it may store the data locally and/or in at least one DBMS for accessibility. The data may be continuously monitored by the mobile APP 40 as user specific set times or set times made by the manufacturer of the LSEGS and/or mobile APP 40. The mobile APP 40 may observe the excess heat rising throughout the middle of the day (see section B in FIG. 9), and trigger a display within the mobile APP GUI (not shown) that indicates that the LSEGS charging has ceased, or it has reduced charging during the elevated temperatures, or entered a trickle charging phase. It may display "solar charging stopped," "solar trickle charging engaged," "detach solar charger," and/or other indicators (not shown) to the user that will have the user understand that any excess heat generated by the LSEGS full and fast charging at elevated temperatures may negatively impact the PED internal battery. Other such indicators may include visual or tactile indicator, such as flashing icons, flashing text, or initiating the vibration on the phone. Alternatively, the vibration may be used continuously to mechanically unplug the charger, such as where a "spring loaded" connection sensitive to such vibration may be used to connect the USB cable to the PED.

Another advantage of a given LSEGS design is that the removal of "extra" circuitry can significantly increases the useful energy available from the LSEGS unit. In standard solar array designs, much of the energy output from the solar generator is used to power the various "extra" circuitry of the device (as previously described), which significantly reduces the overall energy output of the device. Moreover, the conversion and/or "conditioning" of the energy output from the solar panel typically involves significant energy losses, much of which is converted to heat (in a known manner) which requires thermal management and can significantly contribute to the limited lifetime of the entire solar array (i.e., by causing thermal stresses that contribute to thermal fatigue and excessive thermal cycling of such components and/or connections therebetween). Removal of such components in an LSEGS design, therefore, significantly reduces such effects.

### Mobile APP Availability And Cloud-Based Support

Once an appropriate LSEGS and PED have been identified for recharging, the user may opt to employ one or more APPS in conjunction with his or her devices (if not already resident on the device). While the LSEGS will desirably be capable of functioning to charge the PED to a desired level of performance without use of an associated APP (i.e., charging the PED in a "dumb" charging mode), it is anticipated that the use of one or more APPS resident on the powered PED or other device will significant improve the user's experience, as well as further optimize the performance of the LSEGS.

The various embodiments of APPS described herein can be available to users in a variety of ways. The APP may be provided in conjunction with a purchase of a LSEGS, which could include a memory stick or compact disk containing the application. In other embodiments, the APP could be accessed via the World Wide Web using a code or other identifier obtained by the user. Another option could include using the World Wide Web to download the APP to a PED or other device or have the APP accessible via a cloud-based system, and then activating the APP using a code contained in an email or attached to the LSEGS itself. In some embodiments, it would be desirable to link or otherwise associate an APP with a single unique LSEGS or LSEGS type. In other embodiments, it may be desirable to link or otherwise associate an APP with a unique user identification and/or email address. In other embodiments, it may be desirable to link or otherwise associate an APP with a single unique PED and/or PED type.

In various embodiments, the APP will desirably utilize a network or other wireless or wired communications linkage from the PED to connect with a remote server or other device. In one exemplary embodiment, the APP can be downloaded to and remain resident on a portable electronic device such as a smart phone or other device, where the portable electronic device will be receiving energy from the LSEGS. In other embodiments, the APP may be downloaded to a device that is not receiving LSEGS energy, although various features of the APP may be limited or inactive when resident on such a device.

In various other embodiments, the data collected by the plurality of modules within the mobile APP 40 may be uploaded to the cloud for storage, accessibility and/or data analysis. The cloud storage may be PED user accessible with free downloading of the APP or it may be a paid subscription to access and view the data.

### Mobile APP Global Access

In another exemplary embodiment, the mobile APP may include a global access module that functions within the mobile APP. A PED 20 may be attached to a LSEGS 10 to detect, identify, analyze and communicate relevant global information from a plurality of PED users so as to optimize and/or improve charging performance compared to other PED users, as well as globally locate other PED users.

In another embodiment, the mobile APP global access module may have PED and/or PED internal battery features. The PED and/or PED internal battery features may include server access to and/or storage all types of phone brands and/or models (or various subsets thereof), which could include information regarding the behavior and charging consumption of an individual phone type and/or class of phones or other PEDs for a plurality of PED users. This information could potentially allow a PED user to look at various selected phone/PED brands, models, and/or types to see which device is most compatible with the LSEGS or performs the best under a variety of conditions (which may or may not include use with an LSEGS). Such information may also facilitate the user's use of a given PED with the LSEGS.

In another embodiment, the mobile APP global access module may have a power feature. The power feature may collect and/or record voltage and amperage readings and displays information such as "how much energy the phone/PED was consuming" over a period of time or in real time, which could be presented in report from and/or via a caricature or artistic display, as well as include GPS and/or time-stamp information (or various other information as described herein). This data may be stored in a remote database or available in a cloud-based database server. The data may be accessed by a variety of PED consumers when they are interested in purchasing a new model PED, especially where they may wish to engage in a "low energy consumption" lifestyle.

In another embodiment, the mobile APP global access module may have a contest feature. The contest feature may allow a plurality of PED users to enter user information to enter contests. For example, the contest may measure carbon emissions, and the person who has the most reduced carbon may win a prize, money, or other similar credits. Furthermore, contests may include the PED that contains the best energy consumption over time, or the person who has properly optimized and has the highest saved energy may win a prize, money, or other similar credits. These credits may be applied to pay for consumer goods, groceries, and/or wireless PED bill.

In another embodiment, the mobile APP global access module may have a geographical insolation feature. The geographical insolation feature may provide at least one PED user with useful information regarding the geographical location insolation. Other features could provide the best location to charge for the day. For example, there may be certain areas of the city or state or altitude where the intensity of the sun or the weather has changed or is different to some degree, where a more optimal recharging time may be obtained and/or where the greatest effectiveness for charging can be achieved.

In another embodiment, the mobile APP global access module may have a geolocate feature. The geolocate feature could include GPS location awareness (from the PED GPS sensor or via cell-tower triangulation, as well as other location features) to inform the user of nearby locations that might social networking interaction, provide better recharging or charging optimization, as well as identify global locations and/or proximity locations (i.e., it may be user selectable distance or distances entered by the software developer) where other users are charging their PEDs using a LSEGS. For example, in various embodiments the geolocate feature could include providing user profile information, real-time charging status, historical charging status, proximity to various mobile APP and/or LSEGS users, ranked charging efficiency of various users based on user location (i.e., charging efficiency may be determined by LSEGS reorientation, weather, temperature, PED use, etc.), measuring outside temperature (either using PED features or by accessing weather reports or other sources of temperature measurements using wireless or networking capabilities) and displaying how ambient temperatures and/or LSEGS temperatures might affect/degrade/enhance recharging of a PED. Additionally, the geolocate feature may access a global map and place virtual pins where the plurality of LSEGS users are located, then allow you to plot your travel (i.e., get directions) to the specific location. Various icons may depict whether a PED user is undergoing real-time LSEGS charging (i.e., an icon illustrating an electric bolt through the LSEGS panel) and/or historical LSEGS charging (i.e., an icon illustrating the LSEGS panel only).

In another embodiment, the mobile APP global access module may have a network usage feature. The network usage feature may gather information from a wide variety of users on the network, recording the highest and lowest charging times in the region, the state, the country, the continent, the world, etc., and provides information giving insights on how to improve the life and usage of the LSEGS system and/or PED.

In another embodiment, the mobile APP global access module may have a weather condition feature. The weather condition feature could enable a server to collect significant information regarding the function of the LSEGS, as well as the localized solar and/or other weather conditions proximate to the PED. Where multiple PEDS are being powered by LSEGS in this manner over a larger geographic region, the information collected by the server could provide significant insight into the solar and/or weather patterns over this larger region. In some embodiments, this server information could be utilized to predict weather and/or provide warnings to users of inclement weather approaching their area. In other embodiments, the server data could be utilized to determine if a given LSEGS was operating significantly below in performance as compared to other LSEGS in the same region, which might prompt the server to contact the attached PED and notify the user of the deficient operating condition, as well as provide instructions for improving LSEGS performance and/or recommending replacement/repair of the LSEGS unit. Alternatively, the weather condition feature may connect or have access to NOAA, the Weather Channel, state or federal emergency notification systems, Dept. of Homeland Security (disaster response and recovery), etc., for information such as upcoming inclement weather predictions, disasters, and/or preparedness. Various embodiments could include notification of potential poor recharging due to bad weather.

In another embodiment, the mobile APP global access module may include a disaster notification feature. The disaster notification feature could be extremely useful during after extreme weather or during civil disturbances where normal communications and/or energy supplies have been degraded and/or destroyed. During a disaster situation, various data supplied by the APP to a remote server could be queried to identify energy grid outages as well as provide survival instructions and/or "rally points" to users. Such data could also be utilized to identify the location of one or more "survivors," even where voice communications are unavailable and/or unreliable.

In another embodiment, the mobile APP global access module may have a transmitter feature. The transmitter feature could be employed to collect, analyze, and/or utilize the energy generated by the LSEGS to maintain a PED, such as a mobile phone, or other devices such as remote transmitters and/or radio relay towers and/or associated equipment, in a "constant on" state. Such a device could potentially be used a "retransmitter" or signal amplifier for maintaining area communications during a natural disaster or period of social unrest, as well as a localized WiFi or other communication link for other PEDS (i.e., a mobile communications/data "hot-spot"). Multiple such devices could be used to "daisy chain" communications into an area lacking sufficient installed, operational and/or static communications infrastructure. In various embodiments, an ability to maintain the PED/phone "turned on" and connected to the world over an extended period of time can be useful for a variety of social, environmental, economic and disaster communications.

### Mobile APP User Profile

In another exemplary embodiment, the mobile APP may include a user profile module that functions within the mobile APP. A PED 20 may be attached to a LSEGS 10 to detect, identify, analyze and communicate relevant information, which could utilize server communications to facilitate the collection of such information from a plurality of PED users. Such information could then be analyzed and/or utilized to allow social interaction, inform, advertise, and/or market to the specific PED user and other PED users.

In another embodiment, the mobile APP user profile module may include a user information feature. The user information feature may collect specific user information on LSEGS and mobile APP users, such as a photo (real photo or avatar), name (or nickname), address, email address, age, gender (any other demographic information), contact phone numbers, lifestyle, hobbies, and/or any combination thereof. If desired, all such data can I be primarily keyed to the stored data for future and/or immediate access to usage data.

In another embodiment, the mobile APP user profile module may include a social website feature. The social website feature may allow the mobile APP to connect directly to Social Media sites such as mySpace, Instagram, Facebook and Twitter. If desired, the LSEGS performance could be linked to an individual user's profile, or could link to a corporate site, or both to "log-on" to the mobile APP. The social website feature could broadcast live updates through the mobile APP or the various social websites, including one or more of the following: (1) Alert others when the sun is best for charging; (2) Let others know when the sun comes out during cloudy days; (3) Upload pictures of off-grid charging to promote carbon neutral lifestyle; (4) Ask for help on how to charge; (5) Trouble shooting tips; (6) Post all the different types of devices being charged with the LSEGS; (6) Upload stories how the LSEGS helped people in need, or in a disaster, on provided energy when on the go - i.e., various stories of how it helps; and/or (7) targeted advertising.

### Marketing And Advertising

In another exemplary embodiment, the mobile APP may include a marketing and advertising module that functions within the mobile APP. A PED 20 may be attached to a LSEGS 10 to detect, identify, analyze and communicate relevant information from the user and/or from a plurality of PED users, which could be analyzed and/or utilized to inform, advertise, and/or market to the specific PED user and other PED users.

In another embodiment, advertising and marketing features may collect data that may be used for targeted advertising, marketing and/or sales. Such targeted advertising may be directed to past, present and/or future users of various LSEGS devices.

In another embodiment, the mobile APP marketing and advertising module may include a PED recommendation feature. The PED recommendation feature could provide queries and/or information to a user or potential user relating to various external energy generation and storage devices, such as various LSEGS devices of varying generating capacity, and could even recommend which LSEGS might work best with a specific model or model type of PED (i.e., phone model) to optimize performance and energy efficiency. Alternatively, the PED recommendation feature may also detect and/or display what the PED internal battery looks like (i.e., a circuit or graphical diagram), as well as provide various alternatives and/or locations where to purchase a replacement battery (i.e., potentially generating advertising and/or referral sales dollars), recycle batteries and/or dispose of batteries.

In another embodiment, the mobile APP advertising and marketing module may include a PED user habit feature. The PED user habit feature can maintain records on a user's charging habits and/or location, which could potentially be useful to advertisers. Such features could also create user energy plans, allowing users to customize their PED for specific uses, and potentially extending battery life and health. In various embodiments, the PED user habit feature could show daily charging habits of the user, and even compare a variety of user profiles in the same geographic region and/or internationally. Advertisements could be targeted to users based on such charging habits and/or the user's geographic location(s).

In another embodiment, the mobile APP advertising and marketing module may include a user performance feature. The user performance feature could allow the user to compare performance information against that of other PEDs and/or LSEGS, which could facilitate the user's informed decisions about which device(s) to purchase in the future. The user performance feature could recommend devices depending upon a user's preferences. Alternatively, the performance feature may compare other available LSEGS products and/or relate storage devices. In various embodiments, the user performance feature could direct the user to a website or virtual/physical store. By comparing a variety of LSEGS charging products as well as other energy sources, a user could employ the various mobile APP features to desirably determine the best solution to fit their mobile device or other PED.

In another embodiment, the mobile APP advertising and marketing module may include a comparison condition feature. The comparison condition feature may display an estimate or actual performance of another LSEGS model based on current conditions experienced by the PED user and/or simulated conditions based on a geographic location and/or weather conditions. For example, a user with a 500 milli-amp LSEGS might want to know how much faster a 1,000 milli-amp LSEGS might charge his or her PED under existing or simulated conditions. In various embodiments, the APP may provide information on the performance of "stacked" or multiple LSEGS (i.e., double/triple panels) in parallel or serial connection, and how such devices might perform for a variety of uses.

In another embodiment, the mobile APP advertising and marketing module may include a charging personal profile feature. The charging personal profile feature could include collection and logging of a variety of data points for individual user profiles and/or PEDs, with records kept for charging profiles, etc. for each user. By recording the charging profile, the APP could recommend back-up battery solutions and/or charging behaviors which save money, time and potentially improve the user's convenience. Aggregation of such profiles, as well as comparisons of such profiles on a day after day, week after week, month after month, and/or year after year basis, could provide useful data points for recommending what time of day and/or season would provide the best charging based on user's habits.

In another embodiment, the mobile APP advertising and marketing module may include a user input feature. The various data gathered within the mobile APP marketing and advertising module and stored by the various servers and/or other devices described herein could be used or sold to handset manufactures (or other PED or LSEGS manufacturers) to improve the performance of their devices. The evaluation results can identify user habits and likes/dislikes in charging their USB/PED devices, as well as the performance of the charging and charged devices. The PED user may also post the likes/dislikes through any of the social media websites available to increase public awareness by allowing the PED users to compare their measured and/or saved performance information with a plurality of other PEDs, potentially allowing a consumer to make more informed decisions about which PED and/or LSEGS to purchase in the future or recommend various PEDs and/or LSEGS to others.

### Mobile APP Carbon Credits

In addition to the universal availability of renewable energy sources such as solar and wind energy, a significant advantage of generating devices utilizing renewable energy sources is the recent development of a "carbon credit" or "renewable energy credit" exchange system in various markets, including on the world market. In another exemplary embodiment, the mobile APP may include a "carbon credit" or "renewable energy credit" module that functions within the mobile APP. A PED 20 may be attached to a LSEGS 10 to detect, identify, analyze and communicate relevant information from a user or a plurality of PED users to promote the use of renewable energy resources and develop a credit exchange system.

In another embodiment, the mobile APP renewable energy module may include a carbon credit feature. The carbon credit feature may be available for each specific PED user, where the user can begin to collect carbon offset "credits" that could be equal to the amount of carbon "saved" during PED charging with an LSEGS. The LSEGS manufacturer may be able to provide guidance on the number of credits allotted during each LSEGS use and the LSEGS model. Alternatively, the number of credits may be calculated based on calculations known in the art.

In addition, the carbon credit feature may begin to collect and aggregate the number of credits, and the number of credits may be used in various economic and market systems, carbon credits can be traded and/or utilized and can have various levels of economic value. In various embodiments, carbon credit feature can include features that facilitate the collection, utilization, trading and/or validation of renewable energy or carbon offset "credits." Such features may be optional and/or provided free or paid to the mobile APP user, the PED system operator and/or a developer.

In many cases, the contribution of a single LSEGS assembly may form a tiny or "inconsequential" portion of an individual carbon credit, but the aggregate contributions from hundreds or thousands of LSEGS assemblies may quickly generate a significant number or volume of such credits. By facilitating the aggregation of individual LSEGS carbon credits, one or more APPS can create a significant source of revenue for a manufacturer, service provider and/or the various users of the LSEGS devices.

In another embodiment, the carbon credit feature may aggregate carbon offset credits from a plurality of LSEGS or other device users, and the mobile APP can further facilitate and/or broker the sale or auction off of the combined carbon credits to a third party. Measuring the carbon reduction from use of the LSEGS array can quantify and/or value the utility of this by-product of renewable energy generation, and this commodity can be marketed and/or sold on the open markets. Alternatively, the proceeds from the auctioned aggregated carbon credits sold to a third party may be transferred back to an electronic wallet of each individual user, based on a percentage of the overall carbon offsets contributed by that user. The resulting "value" in the electronic wallet, which might be represented by dollars or other currency, bitcoins or other electronic currencies, or by carbon credit components, discount coupons for products/services and/or some other analog, might be utilized by the user to purchase other products and/or services, such as phone access and service plans or additional LSEGS arrays and related components. If desired, the user could combine the value in the wallet with other users, or could choose to donate the value to a charity or other third party, at the user's option.

In another embodiment, the carbon credit feature may use the aggregated carbon offset credits from a plurality of users to conduct a lottery. The lottery may be able to assign the combined carbon credits to one or more users that may include one or more of the users who contributed the individual carbon credits. Such a lottery could include varying a user's chance to win based on the number and/or quantity of carbon credit units that were contributed by the user, with larger contributions of credits increasing the chance of winning the aggregated credits.

In another embodiment, the carbon credit feature may analyzes energy usage and displays "real time" load and/or demand. Any "real-time" information may be displayed on the mobile APP GUI and/or on social network accessible sites (i.e., social networking, etc.)

In another embodiment, the carbon credit feature may provide global access information, including: (1) Measuring of carbon offset in a region, country, and world; (2) Allowing a user to see live data of Carbon offset on a live graph in real time; (3) Allowing a user to select a desired area and evaluate the information; (4) Promote "conservation awareness" by educating users and changing their habits of charging USB devices and altering their use and the performance of charged devices; (5) Allowing a user to look at a variety of PEDS, such as various selected phone brands, models, and types to see which performs the best in conjunction with an LSEGS array; and (6) Facilitate and/or allow a "donation" of money, carbon credit and/or a LSEGS device to a user "in need" directly from another user, with such an "in need" individual possibly located in a less-developed country or someone suffering from "energy poverty."

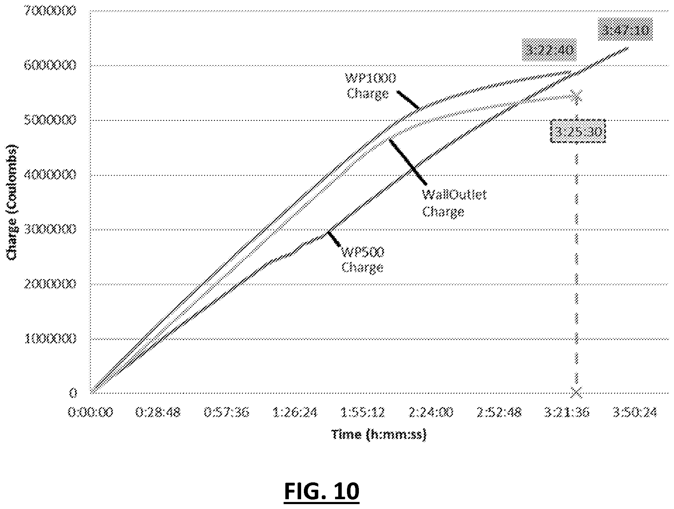

In another embodiment, the carbon credit feature may measure and/or quantify a carbon off-set or "carbon credit" that the renewable energy generated by the LSEGS may represent. This measurement may be actual "real-time" usage, a reduction, and/or an increase in the number of credits. This information may be collected via network or wireless connections and compared to that of other users on the network and/or within a given geographic region, various regions, countries, and/or throughout the world, with a prize or award for highest performance. In various embodiments, the carbon credit measurement may be used as a net metering device, including an ability to record how much carbon the LSEGS or other solar charger device (or other chargers utilizing other renewable energy sources such as wind, geothermal/heat and/or wave energy) is reducing when charging one or more PEDS via solar radiation. If desired, a user could see live data on a live graph in real time, which could include the user's contribution from his or her LSEGS. The user could optionally select an individual area and evaluate the information contained therein. One exemplary method of determining a carbon measurement could include utilizing a measurement of "wall outlet" energy required to replicate and/or duplicate a given charging sequence of the PED, such as the graph shown in FIG. 10. By measuring the area under the curve labelled "Wall Outlet Charge," the equivalent energy saved by the LSEGS charger (i.e., the WP500 or WP100 chargers) could be calculated. (While estimates of carbon footprint for PEDS vary widely based on estimation methods and/or usage of the PED, one calculation method shows that a single charge of a cell phone can generate up to ½ pound of CO₂ emissions - from a coal-fired power plant.)

In another embodiment, the carbon credit feature could include crediting a "value" of the carbon credits (or portions thereof) generated by an LSEGS directly to a user's account, thereby converting the carbon credit "value" to an immediately useful "credit" for purchase of products and/or services by the user from a service provider, other users and/or third parties. Concurrently, the carbon credit can be assigned to the service provider, who can aggregate carbon credits from multiple users and potentially "sell" or trade such credits on a carbon credit (or other) market, as well as potentially utilize the carbon credit to "offset" carbon generation in other aspects of the provider's business. The carbon credits from the user could be valued at a discount from the value on the carbon market, to reflect a "service charge" or "handling fee" for the service provider, or the carbon credits could be valued at the "fair market value" from a given carbon market or markets and/or as related to a specific industry's "need" for such credits. The service provider could also directly trade airtime minutes (or other available services) for a given amount of carbon credits transferred, with an assigned value of the minutes above, below or equal to the value of the carbon credits traded. In this manner, the service provider could sell significantly more products and/or services to its users (thereby significantly increasing utilization rates) while receiving an item of value (i.e., the carbon credits) in exchange. Moreover, by directly converting carbon credits to airtime or other products and/or services offered by the service provider (which could alternatively include discounts and/or coupons in exchange for such credits), the service provider incentivizes the user to "stay" with the service provider in the future (and/or utilize the service provider's products and/or services when further need becomes available), which differentiates the service provider from other providers offering similar services.

### Mobile APP Carbon Credit Verification And Confidence

In another embodiment, the carbon credit feature may include a carbon credit verification process and/or procedure. One significant barrier to the creation of carbon credits and renewable energy offsets by consumers is the need for authentication and/or verification of the credits created by the users of LSEGS. Unlike larger scale carbon credit creation by commercial solar and wind energy plants, which can be verified through site inspections and record verification, the various carbon credit "components" created by consumer use of LSEGS are difficult to verify for a variety of reasons, including the large number of "producers" in the system, the wide geographic dispersion of the various users and the small size or "value" of the individually created carbon credit components created by any one user. Thus, the resulting carbon credits created by aggregating such credit components might be subject to increased scrutiny or fraud concerns.

The carbon credit verification process and/or procedures described herein may significantly increase the confidence in the validity and legitimacy of aggregated carbon credit components for trade and/or sale on carbon credit exchanges. Where confidence in such credits is high, the value inherent in such credits may be realized, which can result in wealth creation and transference to users, third parties and/or charities, if desired.

In another embodiment, the carbon credit verification process and/or procedure may utilize the PED user profile information to transmit information to a remote server. The specific PED user profile and/or energy characteristics (i.e., voltage and/or amperage) created by an LSEGS array can be periodically determined by an attached PED, and these values can be periodically transmitted to and recorded by a remote server via networked and/or wireless communications, optionally with a "time stamp" and/or location of the PED identified using GPS or other location-based system (i.e., cell-tower triangulation, etc.). In a typical LSEGS array, the amperage values (and to some extent the voltage values as well) are constantly changing (such as shown in FIG. 7) - mostly due to variations in the local weather conditions in the geographic locale. Such variations in the recorded energy characteristics can be analyzed and utilized to determine the authenticity of the renewable energy generation. In various embodiments, the variations can be analyzed to determine if they meet an expected range of variations for that given region based on historic measurements and/or estimates. Alternatively, the variations from a plurality of LSEGS devices in a given region can be compared to determine common characteristics and/or ranges, etc. Alternatively, the variations in the recorded energy characteristics of differing carbon credits from a single user (or user group's) PED/LSEGS can be compared and/or analyzed, such as to identify "duplicative" or extremely similar variations between multiple credits (which might indicate the possibility of counterfeiting of carbon credits by the individual user or user group).

In another embodiment, the carbon credit verification process and/or procedure may include carbon credits or other renewable energy "counters" that could be validated in a similar manner, by using variation effects (and comparisons thereof) due to the natural effects of the renewable generating resource. For example, intermittent wind speed could result in measurable alterations to the energy generated by wind turbines, while tidal effects can alter energy generated by tidal and wave generators.

Depending upon the method used and the quality of the validating information, a given carbon credit component can be assigned a "confidence value" between 1.0 (which corresponds to a fully "validated" carbon credit component) and 0.0 (which corresponds to an expected counterfeit or fraudulent carbon credit component). This confidence value can be utilized as a multiplier to value the individual credit component (i.e., a value of 0.5 gives ½ of the value of a full validated credit to the user generating the credit of interest), or can be used as a minimum value to accept credit components for aggregation (i.e., no credit components with a confidence below 0.75 will be accepted for aggregation in a certain system).

### Mobile APP Wireless Carrier Commerce

In another exemplary embodiment, the mobile APP may include a commerce module that functions within the mobile APP. A PED 20 may be attached to a LSEGS 10 to detect, identify, analyze and communicate relevant information from at least one PED user network and/or wireless carrier, where the wireless network carrier may advertise and/or commercially sell products and/or services to the PED user, which could include products and/or services based, at least partially, on the LSEGS use.

In another embodiment, the commerce module may include a wireless carrier targeted advertising feature. The wireless carrier targeted advertising feature may facilitate a wireless carrier's or other service provider's provision of goods and/or services to an individual user or groups of users. For example, the wireless carrier targeted advertising feature could include "branded" features particular to one service provider's service offerings, which could include facilitating the conduct of commerce and/or other transactions between a user and a service provider, between two or more users and/or between two or more service providers, or various combinations thereof. If desired, the wireless carrier targeted advertising feature could be "linked" to a single provider, or could provide information from multiple providers, including allowing a user to compare similar products from different providers (i.e., "airtime" minutes from two providers being offered at differing prices) sequentially or simultaneously, with an option to purchase the selected provider product(s) immediately using the mobile APP and/or a link to a the provider's virtual store. If properly employed, such systems could promote significant "brand loyalty" among users of a particular service provider, as well as facilitate the purchase of products and/or services by the user without requiring the user to travel to a physical vending location or store, which may be located remotely from the user. Not only does this greatly increase convenience for the user, but it also can reduce the need for providers to deliver goods and/or services to disparate locations and/or maintain numerous retail locations.

For example, the commerce module may include an "electronic wallet" or other feature (i.e., a "Mobile Money" account). The "electronic wallet" feature may enable and/or facilitate the purchase, sale and/or distribution of goods or services, including the ability to conduct transactions between two individual users via respective mobile APP users, optionally without involvement of a third-party server. In various embodiments, the commerce module could provide a user with an ability to buy and/or sell "minutes" and/or data bundles for use of a PED (i.e., "talk" minutes and/or data transmission/reception packets of data), and/or transfer credits and/or funds, which could involve the conduct of such transactions between a user and (1) service providers, (2) other users and/or (3) third parties, if desired. The "electronic wallet" feature could include an ability to retain deposits and/or accounts of assets for a user (which might be linked to a carrier's customer account, if desired), with a fee optionally charged for transactions. In various embodiments, the "electronic wallet" feature could be used to buy and/or sell physical items (food or other goods) and/or virtual items of value (i.e., phone plan minutes, etc.), as well as transfer credits and/or funds into and/or out of a given account. If desired, the "electronic wallet" feature could allow transfer and/or aggregation of carbon credits (such as those described herein) into and/or out of the virtual "wallet," as well as facilitate conversion of the carbon credits into cash and/or a credit equivalent for use in purchasing various products and/or services.

In another embodiment, the commerce module may include a vendor or "reseller" feature. The vendor or "reseller" feature can facilitate a PED user's ability to act as a vendor or "reseller" of various goods and services purchased from carriers, from other users and/or from third parties. For example, in many countries it may be difficult for individual users to accumulate sufficient capital (i.e., cash and/or credit) such that they can purchase products and/or services in basic available quantities and/or in "bulk" (which could potentially be priced at a discount from "retail" pricing). However, a group of such PED and/or LSEGS users, or an enterprising individual, may utilize the vendor or "reseller" features to collect sufficient resources to make such a purchase, and then this group or individual can distribute portions of the products and/or services to various users (which may include the assessment of an additional "service" fee, if desired). By facilitating "aggregation" of resources to an individual account (i.e., combining credits from multiple accounts to allow the purchase of a block of minutes from a single account), and then facilitating distribution of the purchased resources (i.e., allowing distribution of individual sub-blocks of minutes from the purchaser's account to another user's account), various vendor or "reseller" features can promote and/or facilitate the sales or goods and/or services to individuals having significantly limited resources, and potentially take advantage of discounts offered for bulk purchases.

Alternatively, the vendor and/or "reseller" feature may involve third parties. The vendor and/or "reseller" feature could include links to one or more databases (or individual websites, etc.) containing information about various service providers (and/or other vendors) and the various prices and/or products they may have available for sale. Such products could include "talk" or usage minutes, airtime, data from third-party vendors such as MTN, Vodacom, Google, Amazon and/or various telecoms, as well as other physical goods and/or virtual products. The vendor and/or "reseller" feature could provide comparative prices of the various vendor's products and, where similar products are offered, could identify attractive pricing options. If desired, the commerce module could include features having alarms, emails, texts and/or other indicators to identify when a desirable "deal" may become available that may be of interest to the user (which may include predefined "deals" as well as those defined by the user). In this manner, the commerce module could further facilitate a user's ability to act as a vendor or "reseller" of various goods and services, desirably leveraging the service providers' various platforms.

In another embodiment, the commerce module may include an entrepreneurship feature. The entrepreneurship feature may allow a PED user to use the LSEGS to charge multiple PEDs simultaneously. The entrepreneurship feature may allow the entrepreneur PED user to activate the "master" mobile APP and "master" LSEGS. The "master" mobile APP may monitor each additional PED user that will be attached to the LSEGS by allowing the entry of the PED user's name, number of minutes to charge the phone, allowing the exchange of carbon credits for payment of charging, and displaying the total charge received by the master LSEGS panel into master mobile APP and/or "slave" mobile APPs. The entrepreneurship feature may also allow automatic recognition and/or manual recognition of additional LSGES and/or other PED users with "slave" mobile APPs.

In another embodiment, the commerce module may allow the ability to engage in subsidiary, partnership, and/or alignment relationships with third parties using the LSEGS technology. The wireless carriers, LSEGS users, PED users, and/or venders may want to sell an LSEGS with a PED, where the third parties could "brand" the LSEGS with logos and/or colors of an individual service provider or provider group, and/or through the commerce feature within the mobile APP serving as advertising for the life of the product(s).

Many of the embodiments described herein, as well as various combinations of features described hereof, can be utilized by a given service provider or third party to differentiate their product and/or service offerings from those of other providers offered on the current market. By linking a LSEGS to a PED, and optionally providing ancillary services that directly and/or indirectly relate to the products and/or services offered by a given service provider or that may be particularly useful to a user, the various mobile APP modules described herein facilitate electronic commerce, promote individual entrepreneurship, increase network utilization and/or accentuate brand loyalty.

### Mobile APP Additional Features

In another exemplary embodiment, the mobile APP may include a variety of other additional features that may be ancillary to the primary function of the mobile APP. These ancillary additional features may be user or third party selectable through the mobile APP to enhance the performance of the LSEGS and/or the marketability of renewable energy resources and related products.

In another embodiment, the mobile APP may allow ranking of LSEGS and/or PEDS performance. The various aggregated data collected through the various modules within the mobile APP could be sold to device makers for analysis and the creation of solution driven strategies. One or more LSEGS suppliers could gather enough data to potentially influence what PEDS might be ranked number 1-2-3 in energy performance (i.e., including best and or worst performers), and this information could influence the entire industry regarding best and/or worst brands. In various embodiments, analyzed data could grant energy generators/solar manufacturers some level of control over PED manufacturers and motivate handset makers to innovate devices to adopt the LSEGS technology as a solution to "on the go" energy.

In another embodiment, the mobile APP may provide a "reset" feature where a smart device or other PED type experiences an energy interruption from the solar generating system, such as where a cloud or other item has shaded the solar panels. Such events may reduce or otherwise alter the energy output of the LSEGS, which may violate one or more of the boundary characteristics of a given energy protection scheme and cause the PED to no longer accept energy from the source until the user has unplugged and then re-plugged the LSEGS to the PED (effectively requiring a "reboot" of the energy transfer to the portable electronic device). In various embodiments, the mobile APP can electronically perform this action without user intervention, while other APP embodiments may inform the user of the "no-energy transfer" condition and provide instructions on rebooting the system, such as by physically disconnecting and the reconnecting the energy connection. In various embodiments the software can reboot the PED (i.e., a smartphone) if it were to get "knocked off" from the LSEGS when a cloud passes or the panel is shaded.

Alternatively, it may be necessary and/or desired for a user to shade or cover a portion of the solar cell array to desirably reduce the voltage (V_{oc}) (produced by the LSEGS and sensed by the PED) to a value that is accepted by the selected energy protection scheme, but which then allows the user to remove the shading once current flow has begun (and V_{oc} has reduced to V_{w} as current flow continues). In this manner, various embodiments of the APP can facilitate a user's ability to tailor the output of the LSEGS to match a desired input for a given PED, even where the LSEGS was not originally optimized for charging of a given PED design. In various embodiments, a variety of energy protection schemes can be embedded within and/or accessible by the APP, or various schemes relevant to a PED model or type can be accessed from a central server database and/or provided on a manufacturer's website, if desired.

In another embodiment, the mobile APP may be provided free with every solar panel purchase, or the APP could be purchased through various website accessible via the World Wide Web, such as google play, the apple store, etc. If desired, a mobile APP (or a LSEGS device, or a combination of both together) could be provided free of charge as part of a product purchase (i.e., a PED purchase) and/or the establishment of a service agreement with a service provider or third party, such as creating a Mobile Money account or other electronic wallet on a PED by a user. Alternatively, a LSEGS device and/or mobile APP could be provided as part of a "bulk" purchase of minutes (i.e., a block of 100 or 500 minutes) or other product(s) and/or service from a service provider. In various embodiments, the purchase of a LSEGS device and/or associated APP could be subsidized by the subsequent automated and/or user-initiated collection of carbon credits by the seller and/or service provider, which in some cases might result in a heavily discounted and/or free LSEGS device (and/or associated APP) to a user who has agreed to such a relationship, in a manner similar to service providers subsidizing sales of handset manufacturers' PEDs to users in conjunction with a long-term service contract.

In another embodiment, the mobile APP may permit users to access stored information and/or data (as well as real time data) for use on their desktop (or another PED) or to be placed in Excel or other spreadsheets. Such access could include using email to access from desktop, where the email address may be manually entered and/or accessed from the user's profile.

In another embodiment, the mobile APP may permit users to transfer LSEGS stored energy to the PED of another LSEGS user. The charge energy generated by a LSEGS c may be collected by a PED or other storage device and then be redistributed to another user, with the energy distributed, controlled and/or limited by the individual user and transferred using the mobile APP to another PED, such as by transferring the stored energy in the PED (which may have originally been generated by an LSEGS) into another PED via a USB charge cable. The limitations may be shown within the GUI of the mobile APP showing transfer and completion status.

In another embodiment, the mobile APP may include various educational tools on the LSEGS, the PED, which may include renewable energy information. The educational tools may teach users how their PED works or charges, how the battery functions, how the device works from an energy perspective, and possibly explaining carbon credit accounts. Such education tools may be provided in a video, links to websites, text, articles, blogs and/or any combination thereof.

In another embodiment, the mobile APP may provide an energy "game" for use by users, based on various energy conservation factors and amount of energy generated by the LSEGS, including features that impel the user to try and extend the life of their PED battery, which can also teach best practices to users.

### Mobile APP Graphical User Interface (GUI)

In various embodiments, the APP will desirably include a graphical user interface (GUI) which provides a user with a visual display of various relevant information, such as the voltage and/or amperage of the energy provided to the PED by the LSEGS (as shown in FIGS. 11 and 12). In one exemplary embodiment, the APP may initially show readings of 0 volts and 0 amps before the LSEGS is attached to the PED (or before the LSEGS is placed in sunlight). Once attached, the APP may show an increasing voltage and zero current (or other "minimal" current flow), such as an exemplary reading of 2 volts and 0 amps, which could potentially reflect an "open circuit" voltage provided by the LSEGS to the PED (i.e., the PED is measuring supplied voltage, but has not yet allowed significant current flow from the LSEGS into the PED). Once the APP shows that a sufficient voltage threshold has been reached (i.e., between 4.75 and 5.25 volts at 0 amps, in one exemplary embodiment), the PED might allow current flow into the PED (with APP potentially reflecting a slight voltage "drop" as current begins to flow into the PED), which could be reflected by an exemplary change in energy from 5.0 volts/0 amps to 4.8 volts/100 milli-amps on the GUI (which desirably reflects a change from open circuit voltage to flowing current voltage) as shown in FIG. 12. The APP will desirably continue to periodically sample the voltage and amperage of the energy supplied by the LSEGS, and display these updated numbers to the user as they are detected. If desired, the textual numerical value of the voltage 570 and the amperage 560 may be displayed.

In various embodiments, the mobile APP may "build" a graphical representation of the energy supply (i.e., voltage and current flow) during the entirety of the charging sequence, such as depicted in FIGS. 11 and 12. The type of graphical representation may be customized by the user, such as a pictorial graph 580 (see FIG. 11), a linear scale graph 610 (see FIG. 12), a bar graph (not shown), pie graph (not shown), line graphs (not shown), and/or any combination thereof. Colors, font, font size, and rearrangement of the graphs (by touching the PED screen to drag and drop) may be user-selectable options within the mobile APP.

In various embodiments, the mobile APP GUI may include various icons depicting the specific module and/or feature within the mobile APP. FIG.13 depicts an exemplary embodiment of an icon-based mobile APP GUI 620 with various icons illustrating various modules and/or features within the mobile APP. Depending upon the available screen size and/or the information density desired by the user, various additional embodiments of possible GUI's, such as those depicted in FIGS. 13 through 15, could be used (with various different screens and/or information available on clickable tabs or "icons," if desired).

For example, the icon-based mobile APP GUI 620 may allow the user to select the different icons and place them in the mobile APP. Such icons that illustrate the various modules and/or features described herein, may include a LSEGS solar icon 630, a PED internal battery information icon 640, a PED icon 650, a global access icon 660, an optimize performance icon 670, a GPS geolocate icon 680, a PED user profile icon 690, and/or any combination thereof. The mobile APP may allow the user to "drag-and-drop" the specific user icons for specific user features, and make other icons standard (i.e., LSEGS solar icon 630, a PED internal battery information icon 640, a PED icon 650, a global access icon 660, an optimize performance icon 670). Should the user select various icons that may not fit onto the PED screen, the mobile APP may allow the icons to scroll across the screen horizontally (as shown in FIGS. 13 through 15) or vertically, if desired. The mobile APP may also highlight the displayed icon information by underlining, brightening, enlargening the icon compared to the other icons, coloration, shadowing the other icons not selected, and various other methods known in the art.

In another embodiment, the icon-based mobile APP GUI 620 may also have sub-menus 710 attached to each icon. Such sub-menus may be displayed simultaneously when the specific icon is selected, such as shown in FIG. 13 through 15. For example, FIG. 13 shows that the PED internal battery information icon 640 is selected. The PED internal battery information icon 640 may have a number of submenus 710 that may present the information for that specific module and/or feature. Such submenus 710 that may be displayed include the status, graphic representations, historical aggregated data, and statistics of the specific icon selected. Other submenus or links to the main icons may also be present in the submenus (i.e., global access or geolocate). The submenus may also be displayed as a pop-up window (not shown) when the specific icon is selected or a hidden menu that is swiped left-or right when the specific icon is selected.

In another embodiment, the mobile APP may provide a renewable energy icon 720 to indicate that the PED user LSEGS has been successfully plugged-in and is currently charging (see FIG. 14). The renewable energy icon 720 may remain displayed on the battery even after the PED is disconnected from the LSEGS to indicate that the energy being discharged from the phone was collected by the LSEGS.

In various embodiments, the GUI may provide the user with one or more options to customize & personalize the GUI from menu selection and/or personalize colors, and may include selectable tabs or other features to switch between different display pages (optionally containing different information and/or display formats). If desired, the APP may have different features across different PED platforms, depending upon the capabilities and/or accessibility of the various features of the differing PEDS.

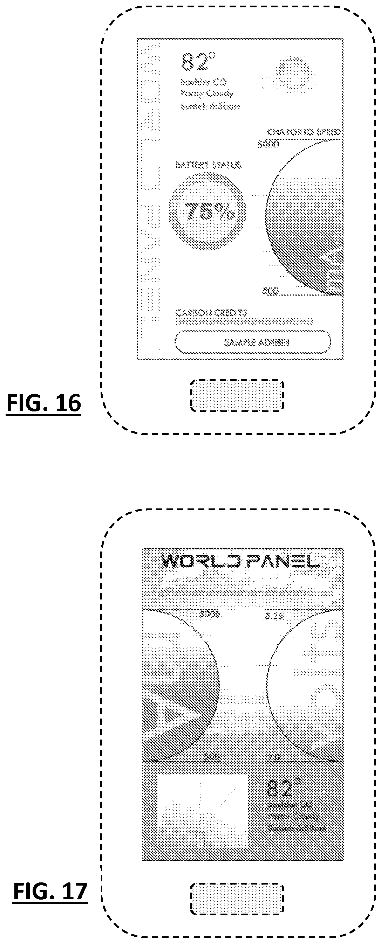

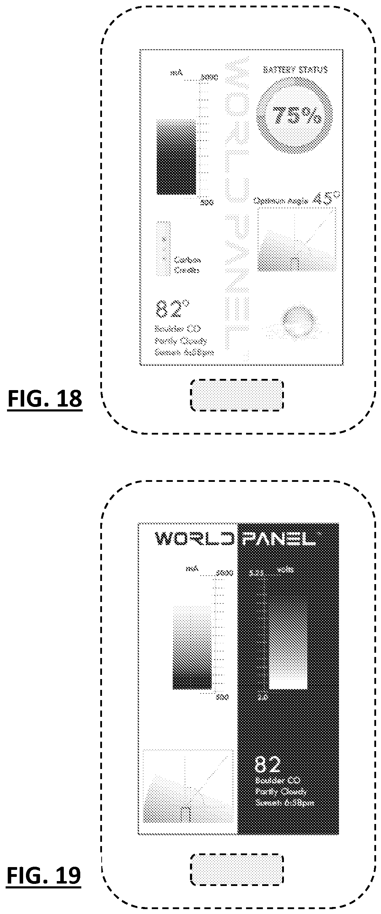

In various embodiments, the GUI of the APP may include some portion of all of one or more "energy protection schemes," such as the scheme graphically depicted in FIG. 6, which is depicted on the exemplary GUI shown in FIG. 11. If desired, an indicator on the GUI can graphically demonstrate the voltage and/or amperage and/or wattage values of the energy being output by the LSEGS (and concurrently being received by the PED) using a graphical indicator (i.e., the glowing point or "sunlight" icon on FIG. 5) overlaying an energy protection scheme graphic on the PED screen, which can be periodically updated (i.e., every ¹/₁₀ second, ¼ second or ½ second or every second or every 2, 3, 4, 5, 6, 7, 8, 9, 10, 15, 30, 45 or 60 seconds up to 24 hours). As the LSEGS is manipulated by the user, such as by moving the device into direct sunlight and/or rotating/elevating the device relative to the sun, various changes to the voltage and/or amperage generated by the LSEGS will desirably be reflected in the GUI (i.e., by movement of the linear scale graphical indicator 610 in FIGS. 12 and 16 through 19, sliding of the various arrow indicators in FIG. 12 and/or alteration of the voltage 560 and amperage 570 values in the boxes of FIGS. 11 and 12), thereby allowing the user to understand how manipulation of the LSEGS alters and/or optimizes the characteristics of the generated energy for recharging the PED/battery. In various alternative embodiments, the GUI could include one or more "meters" or other simulated indicators that reflect the voltage, amperage and/or power of the energy output from the panel and/or accepted by the PED.

The APP may employ a variety of features and display options as part of the GUI. In various embodiments, the GUI may display one or more of the following: length of charging time, V_{open circuit} or V_{oc}, V_{max/}Vₘᵢₙ, current Iₘₐₓ, array alignment, number or generating capacity of panels connected, panel tilt, solar incidence, GPS location, altitude, time of day, carbon credit generation, Pₘₐₓ, watts, and/or any combination thereof as show in FIG. 13 and 14.

In another embodiment, the mobile APP GUI may have dynamic and/or animated GUIs 740. Such dynamic and/or animated GUIs may include dynamic and/or animated icons 750. For example, FIG. 15 illustrates an example of a dynamic and/or animated GUI 740 with a dynamic and/or animated optimization icon 670. The dynamic and/or animated optimization icon 670 may flash, turn, blink, and/or vibrate the PED to indicate that the status of the icon is currently undergoing LSEGS optimization. The mobile APP dynamic and/or animated GUI 740 may show a generic LSEGS and/or the specific model LSEGS orientation scheme 750. The LSEGS orientation scheme 750 may be animated and/or dynamic showing the PED user which direction to rotate 770 and/or tilt 760 the LSEGS. The LSEGS and/or the arrows may be dynamic and/or animated. When such optimal orientation is reached, the mobile APP may flash the LSEGS solar icon 630 to indicate to the PED user that optimal orientation is reached. Also, the GUI may contain textual indication that the optimal voltage and/or amperage has been reached (not shown). Alternatively, the

### Example of a Mobile APP Working Embodiment

In one exemplary embodiment, the present invention includes an APP that leverages PED hardware/software features and operating characteristics to support a user's employment of an LSEGS system by providing a basic function of measuring the precise energy provided to the PED by the LSEGS (which may include voltage and/or current information) on a periodic basis and providing this information to the user. In various embodiments, such information can be detected and/or provided to the user before, during and/or after the PED accepts charge energy from the LSEGS. The APP may be loaded onto a PED such as an Android Developer Phone 2 (ADP2), which is a 3G-enabled T-Mobile phone that uses 3G and 2.5G and is equipped with an ARM processor, 192 MB/288 MB RAM, a 2 GB MicroSD card, and an 802.11b/g WiFi interface. Many modern mobile devices support a high level API for determining the battery charge level, as well as the voltage and amperage levels of energy input to the device. In various embodiments, the mobile APP can access these APIs at periodic intervals and obtain information regarding the voltage, amperage and/or energy input, which will desirably correspond to the output of the LSEGS array. In other embodiments, the APP may access the PED hardware (or LSEGS hardware) directly to determine various voltage, amperage, and/or energy characteristics.

Once the PED has been attached to the LSEGS (using, for example, a USB-type connection), and the LSEGS placed in sufficient sunlight, some amount of energy (i.e., an initial voltage) will desirably travel from the LSEGS into the PED. Typically, the PED will include one or more internal components capable of detecting charge (i.e., voltage) on an energy or charge input of the connection, and this charge will be evaluated by the APP/PED in a variety of ways to determine if the voltage is suitable for supply to the PED. If the voltage meets certain characteristics, current can then flow from the input source and the voltage and/or current can be measured to determine their stability and/or characteristics. If the voltage and/or current characteristics match certain reference values/ranges of the PED, its rechargeable battery and/or various relevant energy protection schemes, the energy will continue to flow into the PED and be utilized in a variety of ways (i.e., to power PED functions, to charge internal batteries and/or to provide energy to the PED and/or attached peripherals).

In various embodiments, the APP may perform an initial diagnostic with the PED and/or the PED rechargeable battery. The diagnostic may include evaluation of the PED rechargeable battery make and model number to retrieve the voltage, amperage, energy, relevant power protection scheme and/or type(s) of port that may be acceptable for recharging. The APP may be designed to measure the information directly from the PED and/or its rechargeable battery, or the APP may communicate with a remote database and access aggregated data of the voltage, amperage, energy, and type of port for different PED/battery makes and models. This information may include actual readings, ranges, or averages of the data measured or retrieved from the database. The information may be displayed on the graphical user interface (GUI) or used as a reference for facilitating/allowing recharging of the PED/battery by the LSEGS.

Depending upon the relevant energy protection scheme, the PED will typically accept current once certain energy parameters are attained. In the scheme depicted in FIG. 6, at 0 amps of current the PED will begin to accept current once the sensed voltage reaches at least 4.75 volts (but will not accept current below that threshold or if the sensed voltage exceeds 5.25 volts). Once the scheme of the PED begins accepting energy and current begins to flow, the graphical indicator will desirably travel to the right on the GUI (concurrent with the measured current flow), indicating the current flow and current voltage for the LSEGS system. It should be noted that, in many instances where energy is accepted, the open circuit voltage (V_{oc}) will drop slightly to a working voltage (V_{w}) as the current begins to flow. In many instances, this V_{w} might drop below the operational range of 4.75 volts to 5.25 volts, which could cause the PED to refuse further current flow (or current flow may be allowed by the energy protection scheme for a limited time, depending upon scheme design and parameters). Desirably, the V_{w} working voltage will remain within the operational range of between 5.25 to 4.75 volts, allowing the current flow to begin recharging the PED, at which point the exemplary energy protection scheme in the PED (as shown FIGS. 2 and 5) will desirably expand its acceptable voltage ranges to between 5.25 and 2.0 volts (see FIG. 6). Once the V_{oc} and/or the V_{w} meets at least the minimum operating voltage, the current will flow into the PED, charging the PED, and should not reject the current.

By providing instant or "near real-time" feedback to a user of the relevant energy protection scheme and the energy characteristics (i.e., voltage and/or current) being produced by the LSEGS, various embodiments of the present system can allow the user a significant amount of flexibility to initiate operation of the system. Because many energy protection schemes are relatively strict in the beginning, and "loosen" energy requirements later in the scheme as current flows, the present system ensures the user is able to best initially accommodate the relevant scheme (i.e., by maintaining the LSEGS still in a certain orientation until energy is accepted and current flow begins) and then allows the user the ability to "relax" once a less strict region of the energy scheme has been attained (i.e., allowing the user to set the LSEGS down and essentially "ignore" the system during the recharge phase). In various embodiments, therefore, the mobile APP can provide feedback to the user to facilitate optimization of the LSEGS array for more efficient & quicker charging of electronic devices, as well as inform the user when the array is safe to "leave alone" for extended periods of charging time. In various embodiments, the user can use various APP features to learn the exact performance characteristics of the LSEGS device.

In various embodiments, the mobile APP can allow the user to initiate charging of their PED using a LSEGS, and then the user can subsequently manipulate and/or modify the alignment and/or positioning of the LSEGS after the charging scheme reaches the "relaxed" region A (i.e., voltage and/or current flows are in the "less strict" region B) as shown in FIG. 9. Such manipulation and/or modification could include transporting the LSEGS and attached PED to a different geographic location after charge initiation and during charging. For example, once the charging sequence is initiated, the user may carry the LSEGS, or may attach the LSEGS to a backpack or a bicycle rack, with the supplied voltage/current constantly altering as the LSEGS is reoriented and/or moved (as the user travels to a different location). When in this "less strict" charging region, therefore, it may be possible that even significant variations in supplied voltage/current would be accepted by the PED.

In various embodiments, the mobile APP can include alarm features or other indicators that identify desired/undesirable conditions and/or notify the user of a specific condition. For example, if the PED ceases to accept energy from the LSEGS for any reason, an audible alarm may sound, or the APP may initiate a text message from the PED to a remotely-located PED 50. In selected embodiments, the PED may provide such information to an internet address 60 and/or a remote server 70, and the server may provide information that initiates the alarm and/or text message. The server may also be provided with permissions to modify the PED remotely in some manner and/or to halt and subsequently "restart" the flow of charging energy to the PED. In various embodiments an alarm feature can be provided that includes electronic communications (i.e., text messaging or emails), visual and/or audible and/or physical (i.e., vibration) alarms for a variety of items, such as when fully charged, when ineffective solar alignment and/or shading effects occur, best time to charge, etc.

FIG. 8 depicts a graphical representation of exemplary charging sequences for a PED using a wall outlet, a 500 milli-amp LSEGS and a 1,000 milli-amp LSEGS, with current flow into an attached PED plotted versus time. In various locations, the current flow from all three sources experiences significant drops, which can correspond to a variety of factors, including weather, clouds and/or other light blockage (for the solar chargers), the UEM chip interrupting the energy flow to keep from overcharging the PED internal battery (i.e., a hiccup), as well as power source variations (for the wall outlet). In many instances, the significant drop in current flow could potentially violate one or more boundary characteristics of a given energy protection scheme or to protect the "smart" circuitry within the PED internal battery, causing the PED to no longer accept energy from the source. In various embodiments, the mobile APP can include features that sense this interruption and/or disruption in the current flow, and desirably "resets" or "reboots" the energy flow, thereby restarting the current flow, as previously described. In various alternative embodiments, the mobile APP could include various counting or other assessment features that could be used to identify the frequency and/or other parameters surrounding the interruptions, which could include a cessation in "resets" of "reboots" after a certain number and/or interval frequency/length (and optional notification of such actions to the user).

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

The various headings and titles used herein are for the convenience of the reader, and should not be construed to limit or constrain any of the features or disclosures thereunder to a specific embodiment or embodiments. It should be understood that various exemplary embodiments could incorporate numerous combinations of the various advantages and/or features described, all manner of combinations of which are contemplated and expressly incorporated hereunder.

The use of the terms "a" and "an" and "the" and similar referents in the context of describing the invention are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., i.e., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A method of optimizing the charging of a portable electronic device (20), comprising
connecting a power input of the portable electronic device to an energy output of a solar panel charging apparatus (10);
activating a software application (40) resident on the portable electronic device, the software application collecting at least one characteristic of an energy flow from the solar panel charging apparatus (10) into the portable electronic device (20); the software application displaying the at least one characteristic of an energy flow on a display screen of the portable electronic device; and
the software application (40) comparing the at least one characteristic of energy flow to a reference value obtained by the software application;
wherein if the reference value exceeds the at least one characteristic of energy flow, the software application (40) initiates a notification to a user of the portable electronic device (20), wherein the notification comprises a recommendation to the user to optimize or improve charging performance.

2. The method of claim 1, wherein the notification comprises instructions to the user to reorient the solar panel charging apparatus (10).

3. The method of claim 2, wherein the instructions to the user comprises the display of numerical, audio, graphical, photographic, icons, tactile, dynamic, or animated instructions.

4. The method of claim 1, or the system in claim 10, wherein the at least one characteristic of an energy flow comprises one of a current or a voltage.

5. The method of claim 1, wherein the notification comprises instructions to the user to reboot the solar panel charging apparatus (10).

6. The method of claim 1, wherein if the reference value exceeds the at least one characteristic of an energy flow for a user-determined amount of time, the software application (40) initiates the notification to a user of the portable electronic device (20).

7. The method of claim 1, wherein the step of collecting at least one characteristic of an energy flow into the portable electronic device (20) comprises determining at least one characteristic of an energy flow into the portable electronic device comprises a range of 1 minute to 24 hours.

8. The method of claim 1, wherein the reference value obtained by the software application (40) comprises a reference value received by the application software from a remote database.

9. The method of claim 1, wherein the reference value obtained by the software application (40) comprises a reference value calculated by the application software from a database of historical characteristic of an energy flow data.

10. A system for optimizing the charging of a portable electronic device (20), the system comprising:
a software application (40) resident on the portable electronic device (20), the software application configured to:
collect at least one characteristic of an energy flow from a solar panel charging apparatus (10) into the portable electronic device (20);
display the at least one characteristic of an energy flow on a display screen of the portable electronic device (20);
compare the at least one characteristic of energy flow to a reference value obtained by the software application (40); and
if the reference value exceeds the at least one characteristic of energy flow, initiate a notification to a user of the portable electronic device (20), wherein the notification comprises a recommendation to a user to optimize or improve charging performance.

11. The system of claim 10, wherein the recommendation to the user comprises instructions to improve thermal stability of the solar panel charging apparatus (10).

12. The system in claim 10, wherein the recommendation to the user to optimize or improve charging performance comprises instructions to reorient a solar panel charging apparatus (10).

13. The system in claim 10, wherein the system further comprises an energy optimization module that updates user collected data to render the system a learning system.

14. The system of claim 10, further comprises a global access module configured to geolocate a user and place user information on a global map.

15. The system of claim 14, wherein the user information includes a user location, a user profile, a user real-time charging status, a user historical charging status, a proximity distance of other user locations, and/or a ranking of charging efficiency for various users based on the user location.

## Patentansprüche

1. Verfahren zur Optimierung des Ladens einer tragbaren Vorrichtung (20), umfassend das
Verbinden eines Netzeingangs der tragbaren elektronischen Vorrichtung mit einem Energieausgang eines Solarzellenladegeräts (10);
Aktivierung einer auf der tragbaren elektronischen Vorrichtung residenten Softwareanwendung (40), wobei die Softwareanwendung wenigstens eine Eigenschaft eines Energieflusses von dem Solarzellenladegerät (10) in die tragbare elektronische Vorrichtung (20) erfasst; wobei die Softwareanwendung die wenigstens eine Eigenschaft eines Energieflusses auf einem Bildschirm der tragbaren elektronischen Vorrichtung anzeigt;
und
wobei die Softwareanwendung (40) die wenigstens eine Eigenschaft des Energieflusses mit einem Referenzwert vergleicht, der von der Softwareanwendung erhalten wird;
wobei, wenn der Referenzwert die wenigstens eine Eigenschaft des Energieflusses überschreitet, die Softwareanwendung (40) eine Mitteilung an einen Benutzer der tragbaren elektronischen Vorrichtung (20) veranlasst, wobei die Mitteilung eine Empfehlung an den Benutzer umfasst, die Ladeleistung zu optimieren oder zu verbessern.

2. Verfahren nach Anspruch 1, wobei die Mitteilung Anweisungen an den Benutzer umfasst, das Solarzellenladegerät (10) neu auszurichten.

3. Verfahren nach Anspruch 2, wobei die Anweisungen an den Benutzer die Anzeige von numerischen, akustischen, grafischen, fotografischen, symbolhaften, taktilen, dynamischen oder animierten Anweisungen umfassen.

4. Verfahren nach Anspruch 1, oder System nach Anspruch 10, wobei die wenigstens eine Eigenschaft eines Energieflusses eine(n) von einem Strom oder einer Spannung umfasst.

5. Verfahren nach Anspruch 1, wobei die Mitteilung Anweisungen an den Benutzer umfasst, das Solarzellenladegerät (10) neu zu starten.

6. Verfahren nach Anspruch 1, wobei, wenn der Referenzwert die wenigstens eine Eigenschaft eines Energieflusses für einen benutzerdefinierten Zeitraum überschreitet, die Softwareanwendung (40) die Mitteilung an einen Benutzer der tragbaren elektronischen Vorrichtung (20) veranlasst.

7. Verfahren nach Anspruch 1, wobei der Schritt des Erfassens wenigstens einer Eigenschaft eines Energieflusses in die tragbare elektronische Vorrichtung (20) das Bestimmen wenigstens einer Eigenschaft eines Energieflusses in die tragbare elektronische Vorrichtung umfasst, wobei der Schritt einen Bereich von 1 Minute bis 24 Stunden umfasst.

8. Verfahren nach Anspruch 1, wobei der durch die Softwareanwendung (40) erhaltene Referenzwert einen von der Anwendungssoftware von einer entfernten Datenbank erhaltenen Referenzwert umfasst.

9. Verfahren nach Anspruch 1, wobei der von der Softwareanwendung (40) erhaltene Referenzwert einen von der Anwendungssoftware aus einer Datenbank mit Stammeigenschaften von Energieflussdaten berechneten Referenzwert umfasst.

10. System zur Optimierung des Ladens einer tragbaren elektronischen Vorrichtung (20), wobei das System umfasst:
eine auf der tragbaren elektronischen Vorrichtung (20) residente Softwareanwendung (40), wobei die Softwareanwendung ausgelegt ist, um:
wenigstens eine Eigenschaft eines Energieflusses aus einem Solarzellenladegerät (10) in die tragbare elektronische Vorrichtung (20) zu erfassen;
die wenigstens eine Eigenschaft des Energieflusses auf einem Bildschirm der tragbaren elektronischen Vorrichtung (20) anzuzeigen;
die wenigstens eine Eigenschaft des Energieflusses mit einem von der Softwareanwendung (40) erhaltenen Referenzwert zu vergleichen; und,
wenn der Referenzwert die wenigstens eine Eigenschaft des Energieflusses überschreitet, eine Mitteilung an einen Benutzer der tragbaren elektronischen Vorrichtung (20) zu veranlassen, wobei die Mitteilung eine Empfehlung an einen Benutzer umfasst, die Ladeleistung zu optimieren oder zu verbessern.

11. System nach Anspruch 10, wobei die Empfehlung an den Benutzer Anweisungen umfasst, die thermische Stabilität des Solarzellenladegeräts (10) zu verbessern.

12. System nach Anspruch 10, wobei die Empfehlung an den Benutzer, die Ladeleistung zu optimieren oder zu verbessern, Anweisungen umfasst, ein Solarzellenladegerät (10) neu auszurichten.

13. System nach Anspruch 10, wobei das System ferner ein Energieoptimierungsmodul umfasst, das vom Benutzer erfasste Daten aktualisiert, um das System zu einem lernenden System zu machen.

14. System nach Anspruch 10, umfassend ferner ein globales Zugangsmodul, das ausgelegt ist, um einen Benutzer zu orten und Benutzerinformationen auf einer Weltkarte einzutragen.

15. System nach Anspruch 14, wobei die Benutzerinformationen einen Benutzerstandort, ein Benutzerprofil, einen Echtzeit-Ladestatus des Benutzers, einen bisherigen Ladestatus des Benutzers, eine Nähe/Distanz anderer Benutzerstandorte und/oder eine Reihenfolge der Ladeeffizienz für verschiedene Benutzer anhand des Benutzerstandorts beinhalten.

## Revendications

1. Procédé d'optimisation de la recharge d'un dispositif électronique portable (20), comprenant
la connexion d'une entrée de puissance du dispositif électronique portable à une sortie d'énergie d'un appareil de recharge à panneau solaire (10) ;
l'activation d'une application logicielle (40) résidant sur le dispositif électronique portable, l'application logicielle collectant au moins une caractéristique d'un flux d'énergie provenant de l'appareil de recharge à panneau solaire (10) dans le dispositif électronique portable (20) ; l'application logicielle affichant l'au moins une caractéristique d'un flux d'énergie sur un écran d'affichage du dispositif électronique portable ; et
la comparaison par l'application logicielle (40) de l'au moins une caractéristique de flux d'énergie à une valeur de référence obtenue par l'application logicielle ;
dans lequel si la valeur de référence dépasse l'au moins une caractéristique de flux d'énergie, l'application logicielle (40) lance une notification à un utilisateur du dispositif électronique portable (20), dans lequel la notification comprend une recommandation à l'utilisateur d'optimiser ou d'améliorer une performance de recharge.

2. Procédé selon la revendication 1, dans lequel la notification comprend des instructions à l'utilisateur pour réorienter l'appareil de recharge à panneau solaire (10).

3. Procédé selon la revendication 2, dans lequel les instructions à l'utilisateur comprennent l'affichage d'instructions numériques, audio, graphiques, photographiques, par icônes, tactiles, dynamiques, ou animées.

4. Procédé selon la revendication 1, ou système selon la revendication 10, dans lequel l'au moins une caractéristique d'un flux d'énergie comprend l'un parmi un courant ou une tension.

5. Procédé selon la revendication 1, dans lequel la notification comprend des instructions à l'utilisateur de redémarrer l'appareil de recharge à panneau solaire (10).

6. Procédé selon la revendication 1, dans lequel si la valeur de référence dépasse l'au moins une caractéristique d'un flux d'énergie pendant une durée déterminée par l'utilisateur, l'application logicielle (40) lance la notification à un utilisateur du dispositif électronique portable (20).

7. Procédé selon la revendication 1, dans lequel l'étape de collecte d'au moins une caractéristique d'un flux d'énergie dans le dispositif électronique portable (20) comprend la détermination d'au moins une caractéristique d'un flux d'énergie dans le dispositif électronique portable comprend une plage de 1 minute à 24 heures.

8. Procédé selon la revendication 1, dans lequel la valeur de référence obtenue par l'application logicielle (40) comprend une valeur de référence reçue par l'application logicielle en provenance d'une base de données à distance.

9. Procédé selon la revendication 1, dans lequel la valeur de référence obtenue par l'application logicielle (40) comprend une valeur de référence calculée par l'application logicielle à partir d'une base de données de caractéristiques historiques de données de flux d'énergie.

10. Système d'optimisation de la recharge d'un dispositif électronique portable (20), le système comprenant :
une application logicielle (40) résidant sur le dispositif électronique portable (20), l'application logicielle étant configurée pour :
collecter au moins une caractéristique d'un flux d'énergie en provenance d'un appareil de recharge à panneau solaire (10) dans le dispositif électronique portable (20) ;
afficher l'au moins une caractéristique d'un flux d'énergie sur un écran d'affichage du dispositif électronique portable (20) ;
comparer l'au moins une caractéristique de flux d'énergie à une valeur de référence obtenue par l'application logicielle (40) ; et
si la valeur de référence dépasse l'au moins une caractéristique de flux d'énergie, lancer une notification à un utilisateur du dispositif électronique portable (20), dans lequel la notification comprend une recommandation à un utilisateur d'optimiser ou d'améliorer une performance de recharge.

11. Système selon la revendication 10, dans lequel la recommandation à l'utilisateur comprend des instructions pour améliorer la stabilité thermique de l'appareil de recharge à panneau solaire (10).

12. Système selon la revendication 10, dans lequel la recommandation à l'utilisateur d'optimiser ou d'améliorer une performance de recharge comprend des instructions pour réorienter un appareil de recharge à panneau solaire (10).

13. Système selon la revendication 10, dans lequel le système comprend en outre un module d'optimisation d'énergie qui met à jour des données collectées par l'utilisateur pour rendre le système sous forme de système d'apprentissage.

14. Système selon la revendication 10, comprenant en outre un module d'accès mondial configuré pour géolocaliser un utilisateur et placer des informations utilisateur sur une carte mondiale.

15. Système selon la revendication 14, dans lequel les informations utilisateur comportent une localisation de l'utilisateur, un profil de l'utilisateur, un statut de recharge en temps réel de l'utilisateur, un statut de recharge historique de l'utilisateur, une distance de proximité d'autres localisations de l'utilisateur et/ou un classement d'efficacité de recharge pour divers utilisateurs d'après la localisation de l'utilisateur.
